(19) Europäisches Patentamt / European Patent Office / Office européen des brevets

(11) **EP 4 446 866 B1**

(12) **EUROPEAN PATENT SPECIFICATION**

(45) Date of publication and mention
of the grant of the patent:
**18.03.2026  Bulletin 2026/12**

(21) Application number: **23876368.4**

(22) Date of filing: **29.08.2023**

(51) International Patent Classification (IPC):
**G06F 3/147** (2006.01)

(52) Cooperative Patent Classification (CPC):
**G06F 3/147; G09G 5/02; G09G 5/10;**
G09G 2320/0666; G09G 2340/06

(86) International application number:
**PCT/CN2023/115414**

(87) International publication number:
**WO 2024/078163 (18.04.2024 Gazette 2024/16)**

(54) **SCREEN DISPLAY METHOD AND APPARATUS, DEVICE, AND STORAGE MEDIUM**

BILDSCHIRMANZEIGEVERFAHREN UND -VORRICHTUNG, VORRICHTUNG UND
SPEICHERMEDIUM

PROCÉDÉ ET APPAREIL D'AFFICHAGE D'ÉCRAN, DISPOSITIF, ET SUPPORT DE STOCKAGE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **10.10.2022  CN 202211235255**

(43) Date of publication of application:
**16.10.2024  Bulletin 2024/42**

(73) Proprietor: **Honor Device Co., Ltd.
Shenzhen, Guangdong 518040 (CN)**

(72) Inventors:
• **LI, Xin
  Shenzhen, Guangdong 518040 (CN)**
• **DAI, Qi
  Shanghai 200433 (CN)**
• **ZHANG, Feng
  Shenzhen, Guangdong 518040 (CN)**
• **ZHAO, Shuxin
  Shanghai 200433 (CN)**
• **HUANG, Yingying
  Shanghai 200433 (CN)**
• **DING, Yue
  Shenzhen, Guangdong 518040 (CN)**
• **DING, Jingfeng
  Shenzhen, Guangdong 518040 (CN)**

(74) Representative: **Goddar, Heinz J.
Boehmert & Boehmert
Anwaltspartnerschaft mbB
Pettenkoferstrasse 22
80336 München (DE)**

(56) References cited:
CN-A- 110 428 794       CN-A- 111 338 726
CN-A- 111 508 450       CN-A- 115 067 873
CN-A- 115 657 992       US-A1- 2012 069 551
US-A1- 2015 379 961     US-A1- 2020 202 585
US-B1- 11 287 692

• NAOMI J. MILLER; ANNE IRVIN: "M/P ratios - Can
we agree on how to calculate them?", 27
November 2019 (2019-11-27), XP002813201,
Retrieved from the Internet <URL:https://web.
archive.org/web/20200902231612/https://www.
ies.org/fires/
m-p-ratios-can-we-agree-on-how-to-calculate-
them/> [retrieved on 20250402]

## Description

### TECHNICAL FIELD

This application relates to the field of electronic technologies, and in particular, to a method, a device for screen display, and a storage medium according to the appended claims.

### BACKGROUND

Melatonin (Melatonin) is an amine hormone produced by the pineal body and plays an important role in regulating circadian rhythm and improving sleep quality. In an era of rapid technological development, an electronic device brings convenience and colorful life to humans, but makes humans rely more on the electronic device. Studies have shown that because blue light emitted by the electronic device inhibits production of melatonin by the pineal body, long-time use of the electronic device causes a series of impacts on human physiological activities. In particular, the production of melatonin is inhibited after long-term use of the electronic device at night, easily resulting in reduced sleep quality and an irregular sleep cycle for a user of the electronic device.

To reduce an impact of the electronic device on a user's physiological activities, some electronic products lower color temperature by compressing a color gamut of blue and green areas in a screen. By lowering the color temperature, the screen is adjusted to reduce the negative impact of the blue light on the user's physiological activities.

However, according to the method of compressing the color gamut of the blue and green areas of the screen, a large quantity of color gamuts are lost, resulting in unrealistic colors and missing of picture details displayed on the screen. Especially in some special application scenarios, such as image processing, photography, and other application scenarios that have high requirements on picture colors and details, conventional technologies often cannot meet requirements of the user.

US 2015/379961 A1 discloses a display system comprising: a display panel; a backlight module for supplying backlight to the display panel; a drive module for driving the backlight module to emit light; and a control module for controlling the drive module to drive the backlight module to emit light. The backlight module comprises first light emitting diodes and second light emitting diodes. A spectral intensity of blue light of light emitted by the first light emitting diode is less than a spectral intensity of each of red light and green light of the light emitted by the first light emitting diode. In examples, the first light emitting diodes are ultraviolet ray-excited light emitting diodes whereas the second light emitting diodes are a blue light-excited light emitting diodes. The control module is configured to employ both first and second light emitting diodes to emit light in a wide-color gamut mode and only the first light emitting diodes to emit light in a blue-light spectral intensity reduction mode.

US 2020/202585 A1 teaches techniques for eliminating harmful blue light spectrum energy from an original spectrum of a light, to reduce harmful effects such as insomnia and low sleep quality.

CN 110428794 A teaches steps of detecting a blue light intensity in LED light emitted by the screen, determining whether the blue light intensity is greater than a preset blue light intensity threshold, and, when it is determined that the blue light intensity is greater than a preset blue light intensity threshold, adjusting an input value of blue light in the screen to filter blue light outputted by the screen.

US 11287692 discloses an LCD display including a backlight unit having long-blue LEDs and violet LEDs, wherein the long-blue set may be turned on during daytime hours to keep a user alert with melatonin suppression to maintain healthy circadian rhythms. The long-blue set may be turned off and the violet set may be turned on in the evening or nighttime hours to encourage melatonin production to encourage a transition to bedtime to maintain healthy circadian rhythms. By this, the LCD display can selectively generate a high circadian stimulation spectrum by the long-blue set, or a low circadian stimulation spectrum by the violet set. In addition, a third driving mode is proposed in which the two sets of LEDs are simultaneously on, thus increasing gamut of the displayed image when i.a. high and low circadian stimulation are not required, such as in a period between a waking up time in the morning and the evening time. In addition, to achieve a larger gamut in the high and low circadian stimulation modes, appropriate colour filters are provided that have filtering characteristics which match the peaks of the spectrum generated by the backlight in the high and in the low circadian stimulation modes.

### SUMMARY

This application provides a method, a device for screen display, and a storage medium to resolve problems of unrealistic color and missing of picture details caused by current blue light reduction technology.

To achieve the foregoing objective, the technical solutions provided in the appended independent claims are used.

According a first aspect, a method for screen display is provided, comprising: obtaining spectral information of a plurality of sub-color lights in a color gamut of an original color light of a screen display picture; calculating, for each sub-color light, a melanopic lux per photopic lux ratio of the sub-color light based on the spectral information of the sub-color light; eliminating, from the original color light, any sub-color light among the plurality of sub-color lights having a melanopic lux per photopic lux ratio that exceeds a preset melanopic lux per photopic lux ratio standard to obtain an updated color light; and displaying the updated color light on the screen, wherein the preset melanopic lux per photopic lux ratio standard is a standard set based on a goal of reducing melatonin inhibition.

In the method provided in embodiments of this application, the preset melanopic lux per photopic lux ratio standard is a standard set based on a goal of reducing melatonin inhibition. A higher melanopic lux per photopic lux ratio of the sub-color light indicates a stronger inhibitory effect of the sub-color light on melatonin. The sub-color light having a melanopic lux per photopic lux ratio that exceeds the preset melanopic lux per photopic lux ratio standard is eliminated from the original color light, to reduce an inhibitory effect of light emitted by the screen on melatonin and reduce a negative impact of blue light on a user's physiological activities. In addition, according to this method of eliminating sub-color light with a high melanopic lux per photopic lux ratio in a targeted manner to enable the screen to display the updated color light, a large quantity of color gamut ranges is retained, thereby providing a user with better visual experience.

In a possible implementation, the preset melanopic lux per photopic lux ratio standard is a melanopic lux per photopic lux ratio threshold. After the melanopic lux per photopic lux ratio of the sub-color light is calculated, the sub-color light having a melanopic lux per photopic lux ratio that exceeds the melanopic lux per photopic lux ratio threshold is eliminated from the original color light, so that the screen displays the updated color light. This can reduce the negative impact of the blue light on the user's physiological activities while color reality and picture details displayed on the screen are maintained to a large extent.

In a possible implementation, target vertex color light is determined from sub-color light having a melanopic lux per photopic lux ratio that is equal to the preset melanopic lux per photopic lux ratio standard. A to-be-eliminated color gamut range is determined based on a color gamut coordinate value of the target vertex color light and color gamut coordinate values of three vertices of the original color light color gamut. The sub-color light within the to-be-eliminated color gamut range is eliminated from the original color light, so that the screen displays the updated color light. The eliminated color gamut range is determined based on the melanopic lux per photopic lux ratio and the preset melanopic lux per photopic lux ratio standard, so that the sub-color light can be eliminated in a targeted manner and reality of color and picture details displayed on the screen can be retained.

In a possible implementation, a linear space transformation matrix is calculated based on a color gamut coordinate value of sub-color light with a highest melanopic lux per photopic lux ratio within the to-be-eliminated color gamut range, and the color gamut coordinate value of the target vertex color light. Transformed color light corresponding to the sub-color light within the to-be-eliminated color gamut range is obtained based on a color gamut coordinate value of the sub-color light within the to-be-eliminated color gamut range and the linear space transformation matrix. The sub-color light within the to-be-eliminated color gamut range is replaced with the transformed color light, so that the screen displays the updated color light. Therefore, after the linear space transformation matrix is calculated, the sub-color light can be eliminated in a targeted manner, and the updated color light can be displayed on the screen by using a simple algorithm.

In a possible implementation, the preset melanopic lux per photopic lux ratio standard is determined based on a time period and a geographical location. Secretion of melatonin in a human body is influenced by biological rhythm, levels of secretion of melatonin in different time periods are different, and the geographical location has certain influence on illuminance. Therefore, based on a combination of time period and geographical location, the preset melanopic lux per photopic lux ratio standard is determined, so that the sub-color light can be eliminated more accurately and properly.

In a possible implementation, the preset melanopic lux per photopic lux ratio standard is determined based on a usage mode that represents a user's usage scenario. Different usage modes may correspond to different preset melanopic lux per photopic lux ratio standards, and the sub-color light is eliminated in a targeted manner based on the user's usage scenario to meet different requirements of the user.

In a possible implementation, the preset melanopic lux per photopic lux ratio standard is determined based on a time period, a geographical location, and a usage mode. This can eliminate the sub-color light more accurately and properly, and reduce the negative impact of the blue light on the user's physiological activities while the different requirements of the user are met.

In a possible implementation, a preset melanopic lux per photopic lux ratio standard is adjusted when an average melanopic lux per photopic lux ratio corresponding to the updated color light is higher than the preset average melanopic lux per photopic lux ratio standard, to obtain an adjusted preset melanopic lux per photopic lux ratio standard; and sub-color light having a melanopic lux per photopic lux ratio that exceeds the adjusted preset melanopic lux per photopic lux ratio standard is eliminated from the updated color light, so that the screen displays adjusted color light, where an average melanopic lux per photopic lux ratio corresponding to the adjusted color light is lower than or equal to the preset average melanopic lux per photopic lux ratio standard. Therefore, based on whether the average melanopic lux per photopic lux ratio corresponding to the updated color light is higher than the preset average melanopic lux per photopic lux ratio standard, it can be determined whether a setting of the current preset melanopic lux per photopic lux ratio standard is appropriate.

In a possible implementation, based on the spectral information of the light of the sub-colors, melanopic equivalent daylight illuminance and brightness corresponding to the light of the sub-colors are calculated; and the melanopic lux per photopic lux ratio corresponding to the light of the sub-colors is obtained based on a ratio of the melanopic equivalent daylight illuminance to the brightness.

According a second aspect, embodiments of this application provide a computer device, where the computer device includes a processor and a memory. The memory is configured to store program code and transmit the program code to the processor. The processor is configured to perform, based on instructions in the program code, steps of the foregoing method for screen display.

According to a third aspect, embodiments of this application provide a computer-readable storage medium. The computer-readable storage medium stores a computer program, and when the computer program is executed by a processor, steps of the foregoing method for screen display are implemented.

## BRIEF DESCRIPTION OF DRAWINGS

FIG. 1 is a schematic diagram of a mechanism of an electronic device affecting sleep according to an embodiment of this application;

FIG. 2 is a diagram of xy chromaticity distribution according to an embodiment of this application;

FIG. 3 is a schematic diagram of a structure of an electronic device according to an embodiment of this application;

FIG. 4 is a block diagram of a software structure of an electronic device according to an embodiment of this application;

FIG. 5 is a schematic diagram of a user interface according to an embodiment of this application;

FIG. 6 is a schematic diagram of an application scenario of automatic adjustment according to an embodiment of this application;

FIG. 7 is a schematic diagram of an application scenario of manual adjustment according to an embodiment of this application;

FIG. 8 is a schematic diagram of a user interface according to another embodiment of this application;

FIG. 9 is a schematic diagram of an application scenario of adjusting a usage mode according to an embodiment of this application;

FIG. 10 is a schematic diagram of an application scenario of switching a usage mode according to an embodiment of this application;

FIG. 11 is a schematic diagram of an impact of light on a biological rhythm according to an embodiment of this application;

FIG. 12 is a schematic diagram of a screen display strategy according to an embodiment of this application;

FIG. 13 is a schematic diagram of a screen display strategy according to another embodiment of this application;

FIG. 14 is a schematic diagram of compressing a color gamut of blue and green areas;

FIG. 15 is a schematic diagram of distribution of light of colors within an original color light color gamut range;

FIG. 16 is a schematic diagram of distribution of light of colors after compression using conventional technologies;

FIG. 17 is a schematic diagram of updated distribution of light of colors according to an embodiment of this application; and

FIG. 18 is a schematic diagram of comparison of average melanopic lux per photopic lux ratios.

## DESCRIPTION OF EMBODIMENTS

In embodiments of this application, the terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a relative concept in a specific manner.

To describe the following embodiments clearly and concisely, brief descriptions for related technologies are as follows:

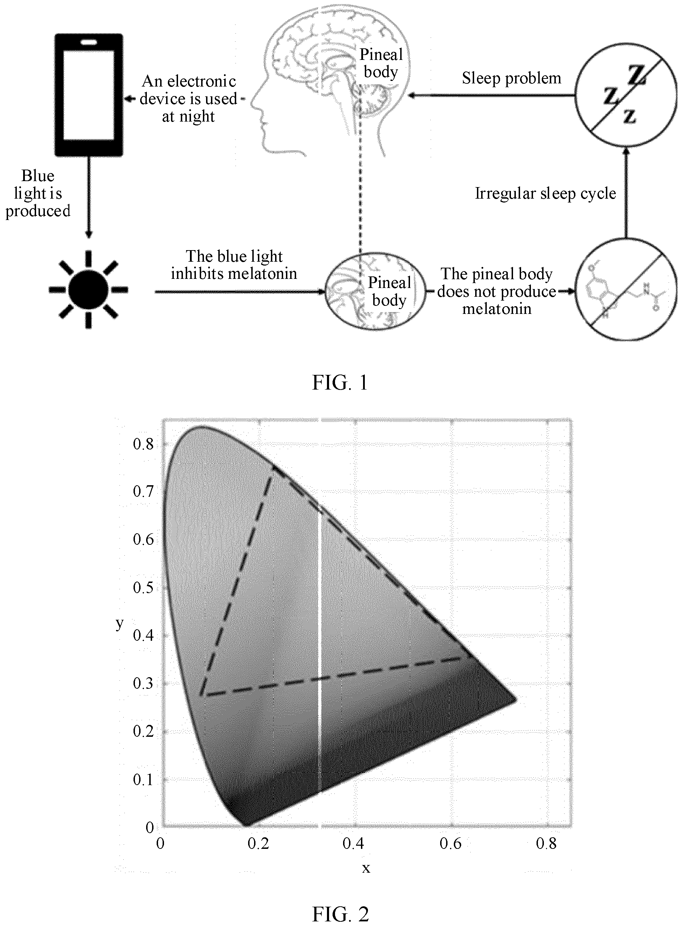

A rhythmic effect of light means an impact of the light on a biological rhythm. To adapt to the environment of earth during a long-term evolution process, living things form an invisible "clock" in the body, referred to as the biological rhythm (or a biological clock). All living things, including humans, are controlled and influenced by biological rhythms. For example, a circadian rhythm has a cycle close to 24 hours and is one of the biological rhythms, participates in many important physiological processes of regulating the human body, and controls daily cycles of various physiological activities such as sleep, wakefulness, hormone secretion, and metabolism. A research shows that the biological rhythm is influenced by an external environment. Light is an important factor influencing the biological rhythm. Unsuitable light stimulation causes a biological rhythm regulation mechanism to be fragile, thereby affecting physical and mental health of humans. FIG. 1 is a schematic diagram of a mechanism of an electronic device affecting sleep. At the same time, humans secrete much melatonin in a dark environment than in a bright environment, indicating that light affects production of melatonin. A research further shows that blue light with a wavelength of about 480 nm has a most significant inhibitory effect on melatonin. Melatonin plays an important role in regulating sleep. A user is supposed to be drowsy when influenced by the biological rhythm at night. However, when the user uses the electronic device at night, blue light emitted by a self-illuminating screen of the electronic device inhibits the production of melatonin by the pineal body in the user's body. Therefore, the user may not feel sleepy at night but feel energetic instead, causing the user's sleep cycle to be irregular and eventually resulting a sleep problem. For example, the user may wake up a plurality of times during the night due to lack of sleep, or may feel sleepy during the day due to insufficient sleep.

There is a red, green, and blue (RGB) color mode. Various colors are obtained by changing three color channels of red (R), green (G), and blue (B) and superimposing the three colors on each other. Most screens use the RGB color mode. All colors of light on the screen are mixed in different proportions of red, green, and blue. Any color on the screen may be recorded and expressed by a set of RGB values.

A color gamut may be used to measure a range of colors that a device can display. FIG. 2 is a diagram of xy chromaticity distribution. An x-axis represents an amount of red light and a y-axis represents an amount of green light. Various colors of light may be represented by horizontal and vertical coordinates in the diagram of chromaticity distribution. It should be noted that in addition to the diagram of xy chromaticity distribution, a diagram of u'v' chromaticity distribution is also a common diagram of chromaticity distribution. Only the diagram of xy chromaticity distribution is used as an example for descriptions. A horseshoe-shaped solid area in the figure includes all the colors that can be seen by human eyes. A dashed triangle area represents a color range that an electronic device can display. A larger color gamut indicates richer colors displayed on the electronic device.

Although conventional technologies can be combined to reduce the impact of the electronic device on the user to a certain extent, a large quantity of color gamuts are also lost, resulting in problems such as reduced picture color richness, unrealistic color, and missing of picture details. Embodiments of this application provide a method, an apparatus, and a device for screen display, and a storage medium. A melanopic lux per photopic lux ratio (M/P ratio) of light of sub-colors can be determined, by obtaining spectral information of the light of a plurality of sub-colors on the screen, based on the spectral information of the light of the sub-colors. Sub-color light having a melanopic lux per photopic lux ratio that exceeds the preset melanopic lux per photopic lux ratio standard may be eliminated from the original color light based on a melanopic lux per photopic lux ratio corresponding to light of each color and a preset melanopic lux per photopic lux ratio standard, thereby adjusting a screen display effect. According to embodiments of this application, screen display is implemented based on the melanopic lux per photopic lux ratio corresponding to light of each sub-color. A higher melanopic lux per photopic lux ratio indicates a stronger inhibitory effect of sub-color light corresponding to the melanopic lux per photopic lux ratio on melatonin. After the preset melanopic lux per photopic lux ratio standard is determined, a melanopic lux per photopic lux ratio corresponding to finally displayed color light is within the preset melanopic lux per photopic lux ratio standard. Therefore, according to the method for screen display, the inhibitory effect of light emitted by the electronic device on melatonin is reduced and a rhythm improvement effect is enhanced. In addition, a large color gamut range is retained, thereby providing the user with better visual experience.

The method provided in embodiments of this application can be applied to a server and various electronic devices. In some embodiments, the electronic device may be a mobile phone, a tablet computer, a desktop computer, a laptop computer, a notebook computer, an ultra-mobile personal computer (Ultra-mobile Personal Computer, UMPC), a handheld computer, a netbook, a personal digital assistant (Personal Digital Assistant, PDA), a wearable electronic device, a smartwatch, or other devices. A specific form of the electronic device is not specially limited in this application.

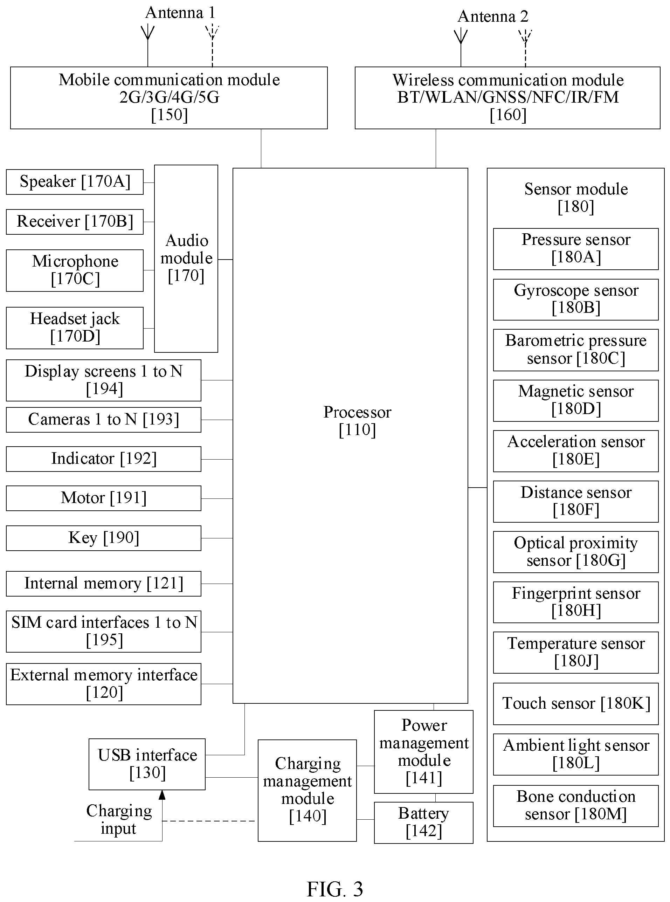

In some embodiments, the electronic device may be a mobile phone, a tablet computer, a desktop computer, a laptop computer, a notebook computer, an ultra-mobile personal computer (Ultra-mobile Personal Computer, UMPC), a handheld computer, a netbook, a personal digital assistant (Personal Digital Assistant, PDA), a wearable electronic device, a smartwatch, or other devices. A specific form of the electronic device is not specially limited in this application. In this embodiment, a structure of the electronic device may be shown in FIG. 3. FIG. 3 is a schematic diagram of a structure of an electronic device according to an embodiment of this application.

As shown in FIG. 3, the electronic device may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a key 190, a motor 191, an indicator 192, a camera 193, a display screen 194, and a subscriber identification module (subscriber identification module, SIM) card interface 195. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the schematic structure in this embodiment constitutes no specific limitation on the electronic device. In other embodiments, the electronic device may include more or fewer components than those shown in the figure, some components may be combined, some components may be split, or a different component deployment may be used. The illustrated components may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be separate devices, or may be integrated into one or more processors.

The controller may be a nerve center and a command center of the electronic device. The controller may generate an operation control signal according to instruction operation code and a timing signal, and implement control on instruction fetching and instruction execution.

A memory configured to store instructions and data may be further disposed in the processor 110. In some embodiments, the memory in the processor 110 is a cache. The memory may store an instruction or data that is recently used or cyclically used by the processor 110. If the processor 110 needs to use the instructions or the data again, the processor may directly invoke the instructions or the data from the memory. This avoids repeated accessing and reduces waiting time of the processor 110, thereby improving system efficiency.

In some embodiments, the processor 110 may include one or more interfaces. The interface may include an integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/-transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus, including a serial data line (serial data line, SDA) and a derail clock line (derail clock line, SCL). In some embodiments, the processor 110 may include a plurality of sets of I2C buses. The processor 110 may be separately coupled to the touch sensor 180K, a charger, a flash, the camera 193, and the like via different I2C bus interfaces. For example, the processor 110 may be coupled to the touch sensor 180K via the I2C interface, so that the processor 110 communicates with the touch sensor 180K via the I2C bus interface to implement a touch function of the electronic device.

The I2S interface may be used for audio communication. In some embodiments, the processor 110 may include a plurality of sets of I2S buses. The processor 110 may be coupled to the audio module 170 via the I2S bus to implement communication between the processor 110 and the audio module 170. In some embodiments, the audio module 170 may transmit an audio signal to the wireless communication module 160 via the I2S interface to implement a function of answering a call via a Bluetooth headset.

The PCM interface may be further used for audio communication to sample, quantize, and encode an analog signal. In some embodiments, the audio module 170 may be coupled to the wireless communication module 160 via a PCM bus interface. In some embodiments, the audio module 170 may alternatively transmit an audio signal to the wireless communication module 160 via the PCM interface to implement the function of answering a call via a Bluetooth headset. Both the I2S interface and the PCM interface may be used for audio communication.

The UART interface is a universal serial data bus used for asynchronous communication. The bus may be a bidirectional communication bus. The bus converts to-be-transmitted data between serial communication and parallel communication. In some embodiments, the UART interface is generally configured to connect the processor 110 and the wireless communication module 160. For example, the processor 110 communicates with a Bluetooth module in the wireless communication module 160 via the UART interface, to implement a Bluetooth function. In some embodiments, the audio module 170 may transmit an audio signal to the wireless communication module 160 via the UART interface, to implement a function of music playback via the Bluetooth headset.

The MIPI interface may be configured to connect the processor 110 and a peripheral device such as the display screen 194 or the camera 193. The MIPI interface includes a camera serial interface (camera serial interface, CSI), a display serial interface (display serial interface, DSI), and the like. In some embodiments, the processor 110 communicates with the camera 193 via the CSI interface to implement a photographing function of the electronic device. The processor 110 communicates with the display screen 194 via the DSI interface to implement a display function of the electronic device.

The GPIO interface may be configured by using software. The GPIO interface may be configured as a control signal or as a data signal. In some embodiments, the GPIO interface may be configured to connect the processor 110 and the camera 193, the display screen 194, the wireless communication module 160, the audio module 170, the sensor module 180, and the like. The GPIO interface may alternatively be configured as an I2C interface, an I2S interface, a UART interface, a MIPI interface, or the like.

The USB interface 130 is an interface that complies with a USB standard specification, and may be specifically a Mini USB interface, a Micro USB interface, a USB Type C interface, or the like. The USB interface 130 may be configured to be connected to a charger to charge the electronic device, or may be configured to transmit data between the electronic device and the peripheral device. The USB interface 130 may alternatively be configured to be connected to a headset to play audio using the headset. This interface may alternatively be configured to be connected to another electronic device, such as an AR device.

It may be understood that an interface connection relationship between the modules illustrated in this embodiment is merely an example for descriptions, and does not constitute a limitation on the structure of the electronic device. In some other embodiments of this application, the electronic device may alternatively use an interface connection manner different from that in the foregoing embodiment, or use a combination of a plurality of interface connection manners.

The charging management module 140 is configured to receive charging input from the charger. The charger may be a wireless charger or a wired charger. In some wired charging embodiments, the charging management module 140 may receive charging input from the wired charger via the USB interface 130. In some wireless charging embodiments, the charging management module 140 may receive wireless charging input via a wireless charging coil of the electronic device. The charging management module 140 may supply power to the electronic device by the power management module 141 while charging the battery 142.

The power management module 141 is configured to connect the battery 142, the charging management module 140, and the processor 110. The power management module 141 receives input from the battery 142 and/or the charging management module 140, and supplies power to the processor 110, the internal memory 121, the display screen 194, the camera 193, the wireless communication module 160, and the like. The power management module 141 may be further configured to monitor battery capacity, a quantity of battery cycles, a battery health state (electric leakage and impedance), and other parameters. In some other embodiments, the power management module 141 may alternatively be disposed in the processor 110. In other embodiments, the power management module 141 and the charging management module 140 may alternatively be disposed in a same device.

A wireless communication function of the electronic device may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device may be configured to cover one or more communication frequency bands. Different antennas may also be reused to improve antenna utilization. For example, the antenna 1 may be reused as a diversity antenna of a wireless local area network. In some other embodiments, the antenna may be used with a tuning switch.

The mobile communication module 150 may provide a solution applied to the electronic device for wireless communication such as 2G/3G/4G/5G. The mobile communication module 150 may include at least one filter, a switch, a power amplifier, a low noise amplifier (low noise amplifier, LNA), and the like. The mobile communication module 150 may receive an electromagnetic wave via the antenna 1, perform processing such as filtering and amplification on the received electromagnetic wave, and transmit the electromagnetic wave to the modem processor for demodulation. The mobile communication module 150 may further amplify a signal modulated by the modem processor. The amplified signal is converted into an electromagnetic wave via the antenna 1 for radiation. In some embodiments, at least some functional modules of the mobile communication module 150 may be disposed in the processor 110. In some embodiments, at least some functional modules of the mobile communication module 150 and at least some modules of the processor 110 may be disposed in a same device.

The modem processor may include a modulator and a demodulator. The modulator is configured to modulate a low-frequency baseband signal to be transmitted into a medium-high frequency signal. The demodulator is configured to demodulate the received electromagnetic wave signal into a low-frequency baseband signal. Then, the demodulator then transmits the demodulated low-frequency baseband signal to the baseband processor for processing. After being processed by the baseband processor, the low-frequency baseband signal is transmitted to the application processor. The application processor outputs a sound signal by an audio device (not limited to the speaker 170A, the receiver 170B, and the like), or displays an image or a video by using the display screen 194. In some embodiments, the modem processor may be a separate device. In other embodiments, the modem processor may be independent of the processor 110 and may be disposed in a same device as the mobile communication module 150 or other functional modules.

The wireless communication module 160 may provide a solution applied to the electronic device for wireless communication including a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), near field communication (near field communication, NFC), an infrared (infrared, IR) technology, and the like. The wireless communication module 160 may be one or more devices integrating at least one communication processing module. The wireless communication module 160 receives an electromagnetic wave via the antenna 2, performs frequency modulation and filtering on the electromagnetic wave signal, and sends the processed signal to the processor 110. The wireless communication module 160 may further receive a to-be-sent signal from the processor 110, and perform frequency modulation and amplification on the signal. The signal is converted into an electromagnetic wave via the antenna 2 for radiation.

In some embodiments, in the electronic device, the antenna 1 is coupled to the mobile communication module 150, and the antenna 2 is coupled to the wireless communication module 160, so that the electronic device may communicate with a network and another device by using a wireless communication technology. The wireless communication technology may include a global system for mobile communications (global system for mobile communications, GSM) technology, a general packet radio service (general packet radio service, GPRS) technology, a code division multiple access (code division multiple access, CDMA) technology, a wideband code division multiple access (wideband code division multiple access, WCDMA) technology, a time-division code division multiple access (time-division code division multiple access, TD-SCDMA), a long term evolution (long term evolution, LTE) technology, a BT technology, a GNSS technology, a WLAN technology, an NFC technology, an FM technology, an IR technology, and/or the like. The GNSS may include a global positioning system (global positioning system, GPS), a global navigation satellite system (global navigation satellite system, GLONASS), a beidou navigation satellite system (beidou navigation satellite system, BDS), a quasi-zenith satellite system (quasi-zenith satellite system, QZSS), a satellite based augmentation system (satellite based augmentation systems, SBAS), and/or the like.

The electronic device implements a display function by using the GPU, the display screen 194, the application processor, and the like. The GPU is an image processing microprocessor and is connected to the display screen 194 and the application processor. The GPU is configured to perform mathematical and geometric calculations for graphics rendering. The processor 110 may include one or more GPUs that execute program instructions to generate or change display information.

The display screen 194 is configured to display an image, video, and the like. The display screen 194 includes a display panel. The display panel may use a liquid crystal display (liquid crystal display, LCD), an organic light-emitting diode (organic light-emitting diode, OLED), an active-matrix organic light emitting diode or active-matrix organic light emitting diode (active-matrix organic light emitting diode, AMOLED), a flex light-emitting diode (flex light-emitting diode, FLED), a Miniled, a MicroLed, a Micro-oled, a quantum dot light emitting diode (quantum dot light emitting diodes, QLED), or the like. In some embodiments, the electronic device may include 1 or N display screens 194. N is a positive integer greater than 1.

A series of graphical user interfaces (graphical user interfaces, GUI) can be displayed on the display screen 194 of the electronic device, and the GUIs are home screens of the electronic device. In general, a size of the display screen 194 of the electronic device is fixed, and only limited controls can be displayed on the display screen 194 of the electronic device. The control is a GUI element, is a software component included in an application, and controls all data processed by the application and interactive operations related to the data. The user can interact with the control using direct manipulation (direct manipulation) to read or edit relevant information about the application. In general, the control may include a visual interface element such as an icon, a button, a menu, a tab, a text box, a dialog box, a status bar, a navigation bar, and a widget.

The electronic device may implement a photographing function by using the ISP, the camera 193, the video codec, the GPU, the display screen 194, the application processor, and the like.

The ISP is configured to process data fed back by the camera 193. For example, during photographing, a shutter is opened, light is transmitted to a photosensitive element of the camera through a lens, and an optical signal is converted into an electrical signal. The photosensitive element of the camera transmits the electrical signal to the ISP for processing, and converts the electrical signal into an image visible to naked eyes. The ISP may further perform algorithm optimization on image noise, illuminance, and skin color. The ISP may further optimize exposure, color temperature, and other parameters of a shooting scene. In some embodiments, the ISP may be disposed in the camera 193.

The camera 193 is configured to capture a still image or a video. An optical image of an object generated through a lens is projected to a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP. The ISP converts the electrical signal into a digital image signal. The ISP outputs the digital image signal to the DSP for processing. The DSP converts the digital image signal into a standard RGB, YUV, or another format image signal. In some embodiments, the electronic device may include 1 or N cameras 193. N is a positive integer greater than 1.

The digital signal processor is configured to process a digital signal and may further process another digital signal in addition to processing the digital image signal. For example, when the electronic device performs a frequency selection, the digital signal processor is configured to perform Fourier transform or the like on frequency energy.

The video codec is configured to compress or decompress a digital video. The electronic device may support one or more video codecs. In this way, the electronic device can play or record videos in a plurality of encoding formats, such as: moving picture experts group (moving picture experts group, MPEG) 1, MPEG 2, MPEG 3, and MPEG 4.

The NPU is a neural-network (neural-network, NN) computing processor. By using a structure of a biological neural network, such as a transmission mode between neurons in the human brain, the NPU can quickly process input information and can continuously learn by itself. By using the NPU, intelligent cognition and another application of the electronic device, such as image recognition, facial recognition, voice recognition, and text understanding, can be implemented.

The external memory interface 120 may be configured to be connected to an external storage card such as a Micro SD card, to expand a storage capability of the electronic device. The external storage card communicates with the processor 110 via the external memory interface 120, to implement a data storage function, such as saving music, video, and another file in the external storage card.

The internal memory 121 may be configured to store computer-executable program code. The executable program code includes instructions. The processor 110 runs the instructions stored in the internal memory 121, to implement various functional applications and data processing of the electronic device. For example, in this embodiment, the processor 110 may recalculate a first display time stamp of a video stream and recalculate a second display time stamp of an audio stream by executing the instructions stored in the internal memory 121. The internal memory 121 may include a program storage area and a data storage area. The program storage area may store an operating system, an application required by at least one function (such as a voice playback function and an image playback function), and the like. The data storage area may store data (for example, audio data and an address book) and the like created when the electronic device is used. In addition, the internal memory 121 may include a highspeed random access memory, and may further include a non-volatile memory, for example, at least one magnetic disk storage device, a flash memory device, or a universal flash storage (universal flash storage, UFS). The processor 110 runs the instructions stored in the internal memory 121 and/or the instructions stored in the memory disposed in the processor, to implement various functional applications and data processing of the electronic device.

The electronic device may implement an audio function such as music playback or recording by using the audio module 170, the speaker 170A, the receiver 170B, the microphone 170C, the headset jack 170D, the application processor, and the like.

The audio module 170 is configured to convert digital audio information into analog audio signal output, and is also configured to convert analog audio input into a digital audio signal. The audio module 170 may be further configured to encode and decode an audio signal. In some embodiments, the audio module 170 may be disposed in the processor 110, or some function modules in the audio module 170 may be disposed in the processor 110.

The speaker 170A, also referred to as a "loudspeaker", is configured to convert an audio electrical signal into a sound signal. The electronic device can allow listening to music or answering a hands-free call through the speaker 170A.

The receiver 170B, also referred to as an "earpiece", is configured to convert an audio electrical signal into a sound signal. When a call is answered or a voice message is listened to by using the electronic device, the receiver 170B may be put close to a human ear to listen to a voice.

The microphone 170C, also referred to as "microphone" or "microphone", is configured to convert a sound signal into an electrical signal. When making a call or sending a voice message, a user can speak close to the microphone 170C with the human mouth to input the sound signal to the microphone 170C. At least one microphone 170C may be disposed in the electronic device. In other embodiments, the electronic device may be provided with two microphones 170C, to implement a noise reduction function in addition to collecting sound signals. In other embodiments, the electronic device may alternatively be provided with three, four, or more microphones 170C to collect the sound signals, reduce noise, identify sound sources to implement a directional recording function, and the like.

The headset jack 170D is configured to be connected to a wired headset. The headset jack 170D may be a USB interface 130, or may be an open mobile terminal platform (open mobile terminal platform, OMTP) standard interface with 3.5 mm, or may be a cellular telecommunications industry association of the USA (cellular telecommunications industry association of the USA, CTIA) standard interface.

The pressure sensor 180A is configured to sense a pressure signal, and may convert the pressure signal into an electrical signal. In some embodiments, the pressure sensor 180A may be disposed on the display screen 194. There are many types of pressure sensors 180A, such as a resistive pressure sensor, an inductive pressure sensor, and a capacitive pressure sensor. The capacitive pressure sensor may include at least two parallel plates having conductive materials. When a force is applied to the pressure sensor 180A, capacitance between electrodes changes. The electronic device determines strength of the pressure based on the change of the capacitance. When a touch operation is performed on the display screen 194, the electronic device measures strength of the touch operation based on the pressure sensor 180A. The electronic device may further calculate a touch position based on a detection signal of the pressure sensor 180A. In some embodiments, touch operations performed on a same touch position but with different touch operation strength may correspond to different operation instructions. For example, when a touch operation having touch operation strength that is less than a first pressure threshold is performed on a short message application icon, an instruction of checking a short message is executed. When a touch operation having touch operation strength that is greater than or equal to the first pressure threshold is performed on the short message application icon, an instruction of creating a short message is executed.

The gyroscope sensor 180B may be configured to determine a motion posture of the electronic device. In some embodiments, an angular velocity of the electronic device around three axes (that is, an x axis, a y axis, and a z axis) may be determined using the gyroscope sensor 180B. The gyroscope sensor 180B may be configured for image anti-jitter during photographing. For example, when the shutter is pressed, the gyroscope sensor 180B measures an angle at which the electronic device jitters, calculates, based on the angle, a distance for which a lens module needs to compensate, and allows the lens to cancel the jitter of the electronic device by performing reverse movement, to implement image anti-jitter. The gyroscope sensor 180B may be further used in scenarios such as navigation and a motion sensing game.

The barometric pressure sensor 180C is configured to measure barometric pressure. In some embodiments, the electronic device calculates an altitude by using the barometric pressure measured by the barometric pressure sensor 180C, to assist in positioning and navigation.

The magnetic sensor 180D includes a Hall sensor. The electronic device may use the magnetic sensor 180D to detect opening or closing of a flip leather case. In some embodiments, when the electronic device is a clamshell phone, the electronic device may detect opening or closing of a flip cover based on the magnetic sensor 180D. Further, based on the detected opening or closing state of the leather case or the detected opening or closing state of the flip cover, a feature such as automatic unlocking of the flip cover is set.

The acceleration sensor 180E may detect an acceleration value of the electronic device in each direction (generally on three axes). When the electronic device is static, magnitude and a direction of gravity may be detected. The acceleration sensor 180E may be further configured to recognize a posture of the electronic device, and is applied to applications such as switchover between horizontal and vertical screens and a pedometer.

The distance sensor 180F is configured to measure a distance. The electronic device may measure a distance through infrared or laser. In some embodiments, in a photographing scene, the electronic device may measure a distance by using the distance sensor 180F, to implement quick focusing.

The optical proximity sensor 180G may include, for example, a light emitting diode (LED), a light detector such as a photodiode. The light emitting diode may be an infrared light emitting diode. The electronic device emits infrared light outward through the light-emitting diode. The electronic device detects infrared reflected light from a nearby object by using the photodiode. When sufficient reflected light is detected, the electronic device may determine that there is an object near the electronic device. When insufficient reflected light is detected, the electronic device may determine that there is no object near the electronic device. The electronic device may use the optical proximity sensor 180G to detect that the user holds the electronic device close to the ear and talks, so that a screen can be automatically turned off to save power. The optical proximity sensor 180G can also be used in a holster mode and a pocket mode for automatically unlocking and locking the screen.

The ambient light sensor 180L is configured to sense ambient light illuminance. The electronic device can correspondingly adjust illuminance of the display screen 194 based on the sensed ambient illuminance. The ambient light sensor 180L may be further configured to automatically adjust white balance during photographing. The ambient light sensor 180L may further cooperate with the optical proximity sensor 180G to detect whether the electronic device is in a pocket, to prevent an accidental touch.

The fingerprint sensor 180H is configured to collect a fingerprint. The electronic device may implement fingerprint unlock, application lock accessing, fingerprint photographing, fingerprint-based call answering, and the like by using a feature of the collected fingerprint.

The temperature sensor 180J is configured to detect a temperature. In some embodiments, the electronic device executes a temperature processing strategy based on the temperature detected by the temperature sensor 180J. For example, when the temperature reported by the temperature sensor 180J exceeds a threshold, the electronic device reduces a performance of a processor located near the temperature sensor 180J, to reduce power consumption and implement thermal protection. In other embodiments, when the temperature is lower than another threshold, the electronic device heats the battery 142, to avoid abnormal shutdown of the electronic device caused by a low temperature. In some other embodiments, when the temperature is lower than still another threshold, the electronic device increases an output voltage of the battery 142, to avoid abnormal shutdown caused by a low temperature.

The touch sensor 180K is also referred to as a "touch device". The touch sensor 180K may be disposed on the display screen 194. The touch sensor 180K and the display screen 194 form a touchscreen, also referred to as a "touchscreen". The touch sensor 180K is configured to detect a touch operation performed on or near the touch sensor 180K. The touch sensor may transfer the detected touch operation to the application processor to determine a type of a touch event. Visual output related to the touch operation may be provided by using the display screen 194. In other embodiments, the touch sensor 180K may be alternatively disposed on a surface of the electronic device at a position different from that of the display screen 194.

The bone conduction sensor 180M may obtain a vibration signal. In some embodiments, the bone conduction sensor 180M may obtain a vibration signal of a vibrating bone block of a human body's vocal part. The bone conduction sensor 180M may be further in contact with a human body's pulse and receive a blood pressure pulsating signal. In some embodiments, the bone conduction sensor 180M may alternatively be disposed in an earphone and combined into a bone conduction earphone. The audio module 170 can analyze a voice signal based on the vibration signal of the vocal vibrating bone block obtained by the bone conduction sensor 180M to implement a voice function. The application processor can analyze heart rate information based on the blood pressure pulsating signal obtained by the bone conduction sensor 180M to implement a heart rate detection function.

The key 190 includes a power key, a volume key, and the like. The key 190 may be a mechanical key, or a touch key. The electronic device may receive key input, and generate key signal input related to user settings and function control of the electronic device.

The motor 191 may generate a vibration prompt. The motor 191 may be configured to provide an incoming call vibration prompt or touch vibration feedback. For example, the motor 191 may correspond to different vibration feedback effects for touch operations on different applications (such as photographing and audio playback). The motor 191 may further correspond to different vibration feedback effects for touch operations on different areas of the display screen 194. Different application scenarios (such as time reminding, receiving information, an alarm clock, and a game) can also correspond to different vibration feedback effects. A touch vibration feedback effect can also be customized.

The indicator 192 may be an indicator light, and may be configured to indicate a charging state or a battery change, or may be further configured to indicate a message, a missed call, a notification, and the like.

The SIM card interface 195 is configured to be connected to a SIM card. The SIM card may be inserted into the SIM card interface 195 or removed from the SIM card interface 195, to be in contact with and be separated from the electronic device. The electronic device may support 1 or N SIM card interfaces, and N is a positive integer greater than 1. The SIM card interface 195 may support a Nano SIM card, a Micro SIM card, a SIM card, and the like. A plurality of cards may be simultaneously inserted into the same SIM card interface 195. Types of the plurality of cards may be the same or different. The SIM card interface 195 may be further compatible with different types of SIM cards. The SIM card interface 195 may be further compatible with the external storage card. The electronic device interacts with the network via the SIM card to implement functions such as call and data communication. In some embodiments, the electronic device uses an eSIM, that is, an embedded SIM card. The eSIM card may be embedded in the electronic device and cannot be separated from the electronic device.

In addition, an operating system runs on the foregoing components, for example, an iOS operating system developed by Apple, an Android open source operating system developed by Google, and a Windows operating system developed by Microsoft. An application can be installed and run on this operating system.

The operating system of the electronic device may use a layered architecture, an event-driven architecture, a microkernel architecture, a micro service architecture, or a cloud architecture. In this embodiment of this application, a software structure of the electronic device is described by using an Android system with a layered architecture as an example.

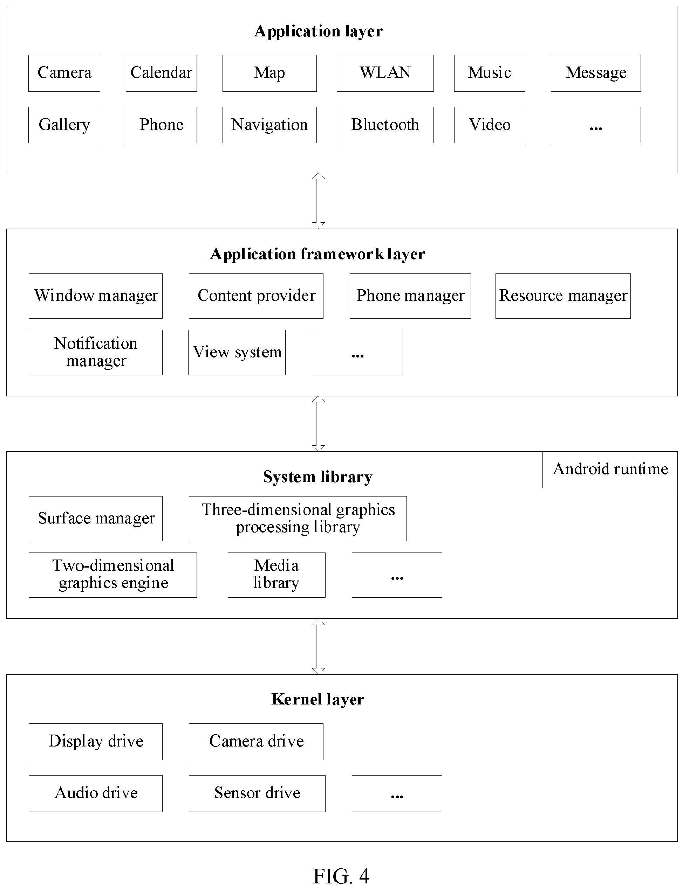

FIG. 4 is a block diagram of a software structure of an electronic device according to an embodiment of this application.

In a layered architecture, software is divided into several layers, and each layer has a clear role and task. The layers communicate with each other through software interfaces. In some embodiments, an Android system is divided into four layers from top to bottom: an application layer; an application framework layer; an Android runtime (Android runtime) and a system library; and a kernel layer.

The application layer may include a series of application packages. As shown in FIG. 4, the application packages may include applications such as Camera, Gallery, Calendar, Phone, Map, Navigation, WLAN, Bluetooth, Music, Video, and Message.

The application framework layer provides an application programming interface (application programming interface, API) and a programming framework for the applications in the application layer. The application framework layer includes some predefined functions. As shown in FIG. 4, the application framework layer may include a window manager, a content provider, a view system, a phone manager, a resource manager, a notification manager, and the like.

The window manager is configured to manage a window application. The window manager may obtain a size of a display screen, determine whether there is a status bar, perform screen locking, perform screen capturing, and the like.

The content provider is configured to store and obtain data, and enable the data to be accessible by an application. The data may include a video, an image, audio, phone calls made and answered, a browsing history, favorites, an address book, and the like.

The view system includes a visual control, for example, a control for displaying text or a control for displaying a picture. The view system may be configured to create an application. A display interface may include one or more views. For example, a display interface including a message notification icon may include a view for displaying text and a view for displaying a picture.

The phone manager is configured to provide a communication function of the electronic device, for example, call status management (including call connection, hang-up, and the like).

The resource manager provides a variety of resources, such as localized character strings, icons, pictures, layout files, and video files, for the applications.

The notification manager enables the application to display notification information in a status bar. The notification messages may be used for conveying an informative message that may disappear automatically after a short period of time without user interaction. For example, the notification manager is used for informing completion of downloading, providing a message reminder, and the like. The notification manager may alternatively provide, on a status bar at the top of the system, a notification in the form of a chart or scroll bar text, for example, a notification of an application running in the background, or provide, on a screen, a notification in the form of a dialog window. For example, text information is prompted in the status bar, a prompt tone is produced, the electronic device vibrates, and an indicator light blinks.

The Android Runtime includes a kernel library and a virtual machine. The Android runtime is responsible for scheduling and managing the Android system.

The core library includes two parts: One part is a functional function that the java language needs to invoke, and the other part is an Android kernel library.

The application layer and the application framework layer are run in the virtual machine. The virtual machine executes java files of the application layer and the application framework layer as binary files. The virtual machine is configured to execute functions such as object lifecycle management, stack management, thread management, security and exception management, and garbage collection.

The system library may include a plurality of function modules, for example, a surface manager (surface manager), a media library (Media Library), a three-dimensional graphics processing library (for example, OpenGL ES), a 2D graphics engine (for example, SGL).

The surface manager is configured to manage a display subsystem and provide fusion of 2D and 3D layers for a plurality of applications.

The media library supports playback and recording of a plurality of commonly used audio and video formats, static image files, and the like. The media library may support a plurality of audio and video encoding formats, for example, MPEG 4, H.264, MP3, AAC, AMR, JPG, and PNG.

The three-dimensional graphics processing library is configured to implement three-dimensional graphics drawing, image rendering, compositing, layer processing, and the like.

The 2D graphics engine is a drawing engine for 2D drawing.

The kernel layer is a layer between hardware and software. The kernel layer includes at least a display driver, a camera driver, an audio driver, and a sensor driver.

It should be noted that although embodiments of this application are explained using the Android system as an example, a basic principle is also applicable to electronic devices based on operating systems such as iOS and Windows.

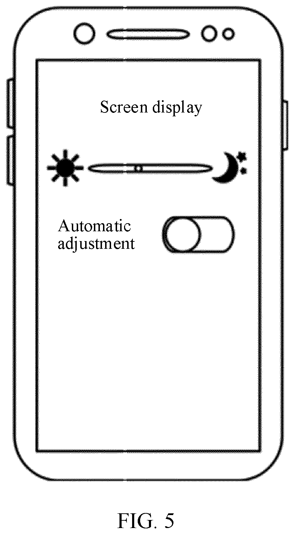

Embodiments of this application provide a screen display application scenario. The following is described with reference to schematic diagrams of a user interface shown in FIG. 5 to FIG. 10, and an example in which a mobile phone is the foregoing electronic device is used.

For example, FIG. 5 is a schematic diagram of a user interface according to an embodiment of this application. A screen display interface shown in FIG. 5 includes a manual adjustment button and an automatic adjustment button. A user may obtain different screen display results in a manual adjustment manner, or tap the automatic adjustment button to obtain different screen display results in an automatic adjustment manner. It should be noted that in addition to manually sliding an adjustment wheel for manual adjustment, manual adjustment can also be performed by customizing an input number. Details are not described herein again.

In this embodiment of this application, a principle that a higher M/P ratio indicates a stronger inhibitory effect on secretion of melatonin in the human body is used, and an M/P ratio is used as a basis for adjusting a screen display effect. A melanopic lux per photopic lux ratio corresponding to the light of sub-colors is calculated by obtaining spectral information of light of a plurality of sub-colors in an original color light color gamut of a screen display picture, and using the spectral information of the light of the sub-colors. Sub-color light having a melanopic lux per photopic lux ratio that exceeds the preset melanopic lux per photopic lux ratio standard is eliminated from the original color light based on a preset melanopic lux per photopic lux ratio standard and a plurality of M/P ratios, so that the screen displays updated color light. An essence of the user obtaining different screen display results using the manual adjustment button or the automatic adjustment button is: adjusting the preset melanopic lux per photopic lux ratio standard to obtain different screen display results.

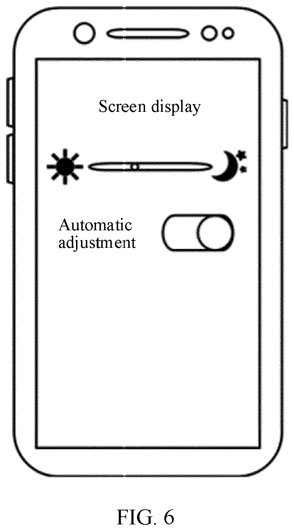

When the preset melanopic lux per photopic lux ratio standard is automatically adjusted by using the automatic adjustment button, as shown in FIG. 6. FIG. 6 is a schematic diagram of an application scenario of automatic adjustment according to an embodiment of this application, the automatic adjustment button in the figure is at the right end, indicating that an automatic adjustment mode is turned on. The mobile phone may automatically determine different preset melanopic lux per photopic lux ratio standards based on a time period, or automatically determine different preset melanopic lux per photopic lux ratio standards based on a combination of time period and geographical location. Because the secretion of melatonin in the human body is affected by a biological rhythm, secretion levels of melatonin are different in different time periods. Especially at night, when light stimulation weakens, enzyme activity of the pineal body to synthesize melatonin increases, and the secretion level of melatonin also increases accordingly and usually reaches a peak at 2 am to 3 am. The level of melatonin at night directly affects sleep quality. To reduce an impact of an electronic device on the user's sleep quality at night, different preset melanopic lux per photopic lux ratio standards may be determined based on different time periods. For example, a preset melanopic lux per photopic lux ratio standard determined from evening to late night is getting lower to prevent the M/P ratio from being excessively high, causing the secretion of melatonin to be inhibited, and affecting the user's sleep quality. In contrast, during the day, a higher preset melanopic lux per photopic lux ratio standard may be determined to obtain better visual experience. In particular, because different geographical locations may have different longitudes, even during a same period, natural light illuminance in different geographical locations is different, so that time of transitioning into nighttime may also be different. In this way, different preset melanopic lux per photopic lux ratio standards may be determined more accurately and properly based on the combination of time period and geographical location.

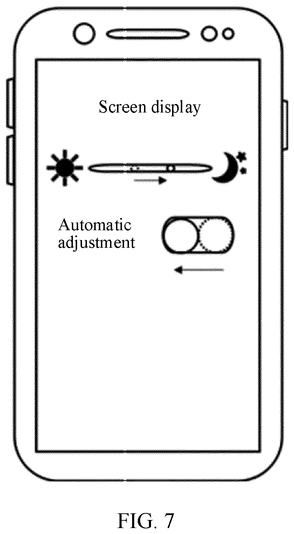

When the user adjusts the preset melanopic lux per photopic lux ratio standard using the manual adjustment button, as shown in FIG. 7. FIG. 7 is a schematic diagram of an application scenario of manual adjustment according to an embodiment of this application. It should be noted that the preset melanopic lux per photopic lux ratio standard may be determined by sliding the adjustment wheel, or an input number can be customized as the preset melanopic lux per photopic lux ratio standard. This figure only shows a method for determining the preset melanopic lux per photopic lux ratio standard by sliding the adjustment wheel. If the electronic device is in the automatic adjustment mode before manual adjustment, that is, the automatic adjustment button is at the right end as shown in FIG. 6, and if the adjustment wheel is slid for manual adjustment in this case, the automatic adjustment button automatically returns to an off state as shown in FIG. 7, that is, the automatic adjustment button automatically returns to the left end. When the manual adjustment button is moved toward a moon pattern end, the preset melanopic lux per photopic lux ratio standard is reduced. When the manual adjustment button is moved toward a sun pattern end, the preset melanopic lux per photopic lux ratio standard is increased. Specifically, a higher preset melanopic lux per photopic lux ratio standard indicates richer colors displayed on the corresponding screen, providing the user with a better visual effect. A lower preset melanopic lux per photopic lux ratio standard can reduce more impacts of blue light on secretion of melatonin and reduce an impact of a mobile phone on the user's sleep quality.

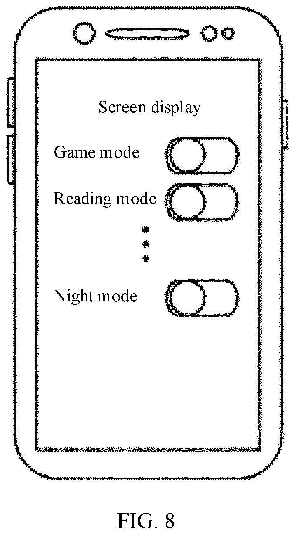

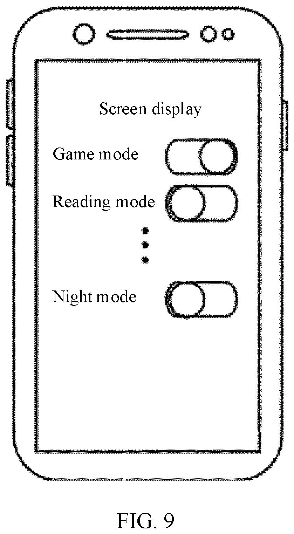

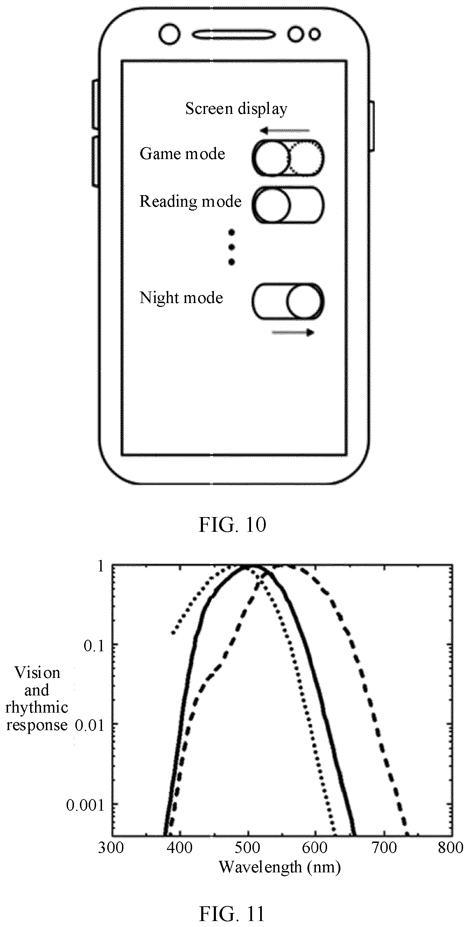

For example, FIG. 8 is a schematic diagram of a user interface according to another embodiment of this application. The user may determine different usage modes, such as a game mode, a reading mode, and a night mode, based on different states of the user. It should be noted that specific usage modes are not limited in embodiments of this application. Different usage modes correspond to different preset melanopic lux per photopic lux ratio standards. A process of determining different usage modes is essentially a process of determining different preset melanopic lux per photopic lux ratio standards. For example, when using an electronic device to play a game, the user can start a game mode through a game mode button, as shown in FIG. 9. FIG. 9 is a schematic diagram of an application scenario of adjusting a usage mode according to an embodiment of this application. The button corresponding to the game mode is at the right end, and buttons corresponding to other modes are at the left end, indicating that the game mode is started. Because when the user plays the electronic game, the user generally has a high requirement for a visual effect and the brain of the user is in an excited state, a higher level of preset melanopic lux per photopic lux ratio standard corresponding to the game mode can reduce the user's sleepiness to a certain extent and provide the user with a better visual effect simultaneously. Correspondingly, FIG. 10 is a schematic diagram of an application scenario of switching a usage mode according to an embodiment of this application. When it is necessary to switch from a game mode to a night mode, a button corresponding to the night mode may be moved to the right end. In this case, the button corresponding to the night mode is at the right end, and buttons corresponding to other modes are at the left end, indicating that the night mode is started. Compared with the game mode, the night mode may correspond to a lower level of preset melanopic lux per photopic lux ratio standard, to reduce an impact of blue light on secretion of melatonin, thereby reducing an impact of a mobile phone on the user's sleep quality.

Further, a same mode in different time periods may correspond to different preset melanopic lux per photopic lux ratio standards. For example, for day and night, corresponding preset melanopic lux per photopic lux ratio standards are different when the user is in a reading mode. A preset melanopic lux per photopic lux ratio standard corresponding to a reading mode in the day may be set to be higher than a preset melanopic lux per photopic lux ratio standard corresponding to a reading mode at the night.

In conclusion, the user may determine different preset melanopic lux per photopic lux ratio standards in the manual or automatic adjustment manner, or determine different usage modes based on different uses to determine the preset melanopic lux per photopic lux ratio standard. After the preset melanopic lux per photopic lux ratio standard is determined, the sub-color light having a melanopic lux per photopic lux ratio that exceeds the preset melanopic lux per photopic lux ratio standard is eliminated from the original color light, so that the screen displays the updated color light.

Embodiments of this application discloses a method for screen display. A melanopic lux per photopic lux ratio of light of sub-colors is calculated by obtaining spectral information of the light of a plurality of sub-colors in an original color light color gamut of a screen display picture, and according to the spectral information of the light of the sub-colors. Sub-color light having a melanopic lux per photopic lux ratio that exceeds a preset melanopic lux per photopic lux ratio standard is eliminated, so that the screen displays updated color light. According to the method for screen display provided in embodiments of this application, the sub-color light is eliminated based on the melanopic lux per photopic lux ratio, and the sub-color light can be eliminated in a targeted manner. This effectively reduces an impact of blue light on a user while color reality and picture details are retained to a certain extent, thereby providing the user with better visual experience.

Specifically, a screen is usually composed of three kinds of light-emitting diodes in red, green, and blue. The three colors of red, green, and blue are mixed in different proportions to produce various colors of light. To be specific, different colors of light displayed on the screen are composed of a mixture of light of different intensities and wavelengths. For example, orange light on the screen is not monochromatic light with a wavelength of 600 nm, but can be composed of a mixture of red and green light. It can be considered that light of each color corresponds to a piece of spectral information, and the spectral information includes spectral irradiance and a spectral range corresponding to the light of each color. A melanopic lux per photopic lux ratio corresponding to the color light may be calculated based on the spectral information of the color light.

To more scientifically and effectively reduce damage caused by blue light to the user and reduce an impact of an electronic device on a user's biological rhythm, in embodiments of this application, the melanopic lux per photopic lux ratio corresponding to the sub-color light is used as a basis from a perspective of biological science, to eliminate, based on the preset melanopic lux per photopic lux ratio standard and the melanopic lux per photopic lux ratio of the sub-color light, the sub-color light having the melanopic lux per photopic lux ratio that exceeds the preset melanopic lux per photopic lux ratio standard, to obtain a screen display result after elimination, thereby effectively reducing the impact of blue light on the user. Specifically, light stimulates intrinsically photosensitive retinal ganglion cells (ipRGC) through the retina of human eyes and a light signal is transmitted to the suprachiasmatic nucleus (SCN), that is, the rhythm center. The SCN then outputs a rhythm signal in the form of autonomic nerve regulation and hormone secretion, to implement control of the biological rhythm. The ipRGC plays a leading role in non-visual photosensitivity. Photoreceptor protein melanopsin on cell membrane of the ipRGC can respond to intensity of light, especially blue light with a short wavelength, inhibiting secretion of melatonin and affecting the biological rhythm. FIG. 11 is a schematic diagram of an impact of light on a biological rhythm according to an embodiment of this application. A dotted line in the figure represents an impact of light with various wavelengths on melatonin. A greater value indicates stronger inhibition on melatonin. A solid line represents response of human eyes to light with different wavelengths under a scotopic condition. A dashed line represents response of human eyes to the light with different wavelengths under a photopic condition. It can be learned from FIG. 11 that blue light with a wavelength of about 480 nm has a most significant impact on melatonin. In other words, blue light with a wavelength of about 480 nm has a strongest inhibitory effect on secretion of melatonin. Melanopic equivalent daylight illuminance (Melanopic Equivalent Daylight (D65) Illuminance, Melanopic EDI) and equivalent melanopic lux (Equivalent Melanopic Lux, EML) are used to quantify a rhythmic effect based on a photosensitive property of melanopsin in the ipRGC. The melanopic lux per photopic lux ratio corresponding to the sub-color light is proposed based on two quantitative models: the melanopic equivalent daylight illuminance and the equivalent melanopic lux, and represents influence of the sub-color light per photopic lux on the biological rhythm. It can be considered that larger influence indicates a stronger inhibitory effect of the sub-color light on secretion of melatonin. In view of this, in embodiments of this application, the melanopic lux per photopic lux ratio may be calculated in two ways. To be specific, a melanopic lux per photopic lux ratio corresponding to color light is obtained by calculating a ratio of EML to brightness, or calculating a ratio of Melanopic EDI to brightness. Melanopic lux per photopic lux ratios obtained by the two calculation ways are approximately proportional. In embodiments of this application, an example in which the melanopic lux per photopic lux ratio is calculated based on the Melanopic EDI is used for description.

The Melanopic EDI may be represented by formula (1) as follows:

$$\text{Melanopic EDI} = \frac{\int E_{e,\lambda}(\lambda) S_{mel}(\lambda) d\lambda}{K_{mel.V}^{D65}} = \frac{\int E_{e,\lambda}(\lambda) S_{mel}(\lambda) d\lambda}{1.3262 \ mW \cdot lm^{-1}} \qquad (1)$$

In formula (1), $\lambda$ represents a wavelength of a visible light spectrum, and a wavelength range is 380 nm to 780 nm. $E_{e,\lambda}(\lambda)$ is spectral irradiance, and a unit is W/m2/nm. S() is an action spectrum of melanopsin, as shown in the dotted line of FIG. 11. $K_{mel.V}^{D65}$ is a constant 1.3262 mW/lm. Light of each sub-color corresponds to a piece of spectral information, and the spectral information includes spectral irradiance corresponding to the light of each sub-color.

There are differences in a user's perception for brightness of light of different sub-colors. For light of one sub-color, illuminance of the light of the sub-color can be expressed by formula (2) as follows:

$$L = \int E_{e,\lambda}(\lambda)V(\lambda)d\lambda \qquad (2)$$

In formula (2), L represents brightness, and $V(\lambda)$ represents a spectral luminous efficiency function for photopic vision, as shown in the dash line of FIG. 11.

Melanopic EDI and brightness corresponding to light of each sub-color may be calculated based on the spectral information of the light of each sub-color, and then a melanopic lux per photopic lux ratio corresponding to the light of each sub-color may be calculated, as shown in formula (3):

$$M/P\ ratio = \frac{Melanopic\ \ EDI}{L} \qquad (3)$$

In formula (3), M/P ratio represents the melanopic lux per photopic lux ratio, and may be obtained by calculating a ratio of the Melanopic EDI to illuminance. A higher M/P ratio of the sub-color light indicates a stronger inhibitory effect of the sub-color light on secretion of melatonin. Sub-color light with a high M/P ratio may be eliminated to reduce the inhibitory effect on the secretion of melatonin.

A plurality of points are evenly selected within a color gamut that can be displayed on the electronic device based on the foregoing method. Each point corresponds to light of each sub-color. An M/P ratio corresponding to the light of each sub-color may be calculated based on the spectral information of the light of each sub-color. The sub-color light having the melanopic lux per photopic lux ratio that exceeds the preset melanopic lux per photopic lux ratio standard may be eliminated from the original color light based on the M/P ratio and the preset melanopic lux per photopic lux ratio standard.

Specifically, the preset melanopic lux per photopic lux ratio standard may be determined in the following manners:

Manner 1: Different preset melanopic lux per photopic lux ratio standards are determined based on a time period, or different preset melanopic lux per photopic lux ratio standards are determined based on a combination of time period and geographical location. Because the secretion of melatonin in the human body is affected by a biological rhythm, secretion levels of melatonin are different in different time periods. Especially at night, when light stimulation weakens, enzyme activity of the pineal body to synthesize melatonin increases, and the secretion level of melatonin also increases accordingly and usually reaches a peak at 2 am to 3 am. The level of melatonin at night directly affects a user's sleep quality. To reduce an impact of an electronic device on the user's sleep quality at night, different preset melanopic lux per photopic lux ratio standards may be determined based on different time periods. For example, a preset melanopic lux per photopic lux ratio standard determined from evening to late night is getting lower to prevent the M/P ratio from being excessively high, causing the secretion of melatonin to be inhibited, and affecting the user's sleep quality. In contrast, during the day, a higher preset melanopic lux per photopic lux ratio standard may be determined to obtain a better visual effect.

Manner 2: Different preset melanopic lux per photopic lux ratio standards are determined based on different usage modes. The usage modes include a video mode, a game mode, a reading mode, and the like. Specific usage modes are not limited in embodiments of this application. Different usage modes may correspond to different preset melanopic lux per photopic lux ratio standards. The usage mode may represent a user's usage scenario. For example, when the user uses the electronic device to play a game, a corresponding usage mode is a game mode. In this case, the user generally has a high requirement for a visual effect and the brain of the user is in an excited state, then a high level of preset melanopic lux per photopic lux ratio standard may be determined. This can reduce the user's sleepiness to a certain extent and provide the user with a better visual effect simultaneously.

Manner 3: The preset melanopic lux per photopic lux ratio standard may be determined based on a time period, a geographical location, and a usage mode. To be specific, in a case of the same geographical location and usage mode, different time periods correspond to different preset melanopic lux per photopic lux ratio standards. Alternatively, in the same time period and the same geographical location, different usage modes correspond to different preset melanopic lux per photopic lux ratio standards. For example, for day and night, corresponding preset melanopic lux per photopic lux ratio standards are different when the user is in a reading mode. A preset melanopic lux per photopic lux ratio standard corresponding to a reading mode in the day may be set to be higher than a preset melanopic lux per photopic lux ratio standard corresponding to a reading mode at the night.

Further, the determined preset melanopic lux per photopic lux ratio standard may be adjusted based on an average melanopic lux per photopic lux ratio (average M/P ratio) corresponding to updated color light, to obtain an adjusted screen display result. A higher average M/P ratio indicates that it is less conducive to the secretion of melatonin. Further, a preset average melanopic lux per photopic lux ratio standard is used as an upper limit of the average M/P ratio. When the average M/P ratio exceeds the preset average melanopic lux per photopic lux ratio standard, it means that the preset melanopic lux per photopic lux ratio standard determined in this case is inappropriate. Light of more sub-colors corresponding to high M/P ratios is eliminated by lowering the preset melanopic lux per photopic lux ratio standard, thereby reducing an average M/P ratio corresponding to adjusted color light. In this way, the average M/P ratio corresponding to the adjusted color light does not exceed the preset average melanopic lux per photopic lux ratio standard.

Specifically, the average M/P ratio corresponding to the updated color light is obtained. When the average M/P ratio exceeds the preset average melanopic lux per photopic lux ratio standard, the preset melanopic lux per photopic lux ratio standard is adjusted. The average M/P ratio may be expressed by formula (4) as follows:

$$\overline{\text{M/P ratio}} = \frac{\sum_i^n \text{Melanopic } \text{EDI}_i}{\sum_i^n \text{L}_i} \tag{4}$$

In formula (4), n represents a quantity of selected points, that is, an amount of sub-color light in the updated color light. For example, a plurality of points may be selected evenly within a color gamut range corresponding to the updated color light. The Melanopic EDI and L corresponding to the sub-color light are calculated based on the spectral information of the light of the plurality of sub-colors in the updated color light. A ratio of a sum of Melanopic EDI of light of a plurality of sub-colors to a sum of a plurality of Ls is used as the average M/P ratio corresponding to the updated color light. Similarly, the preset average melanopic lux per photopic lux ratio standard can also be determined through the above three manners. Details are not described herein again. When the average M/P ratio exceeds the preset average melanopic lux per photopic lux ratio standard, the preset melanopic lux per photopic lux ratio standard is adjusted to obtain an adjusted preset melanopic lux per photopic lux ratio standard. Sub-color light having a melanopic lux per photopic lux ratio that exceeds the adjusted preset melanopic lux per photopic lux ratio standard in the updated color light is eliminated, so that adjusted color light is displayed on the screen. For example, the preset melanopic lux per photopic lux ratio standard is lowered, light of more sub-colors corresponding to high M/P ratios is eliminated based on the lowered preset melanopic lux per photopic lux ratio standard. Therefore, the average M/P ratio corresponding to the adjusted color light does not exceed the preset average melanopic lux per photopic lux ratio standard, optimizing the preset melanopic lux per photopic lux ratio standard.

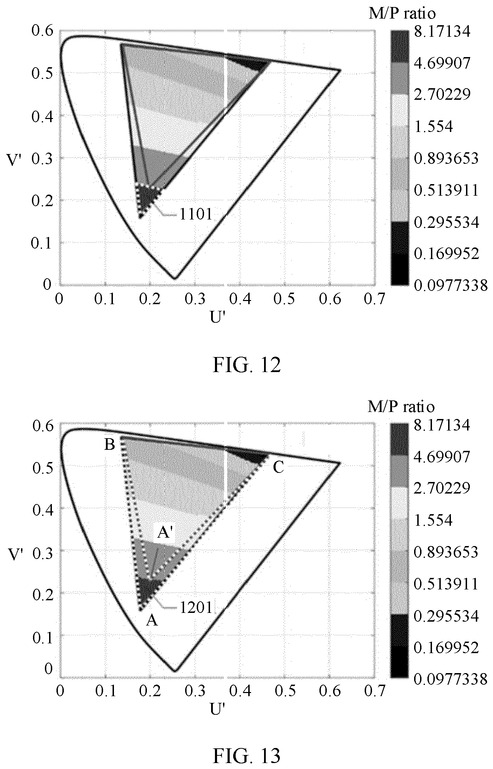

Specifically, in an embodiment of this application, the preset melanopic lux per photopic lux ratio standard is a melanopic lux per photopic lux ratio threshold (M/P ratio threshold), and sub-color light having an M/P ratio that is higher than the M/P ratio threshold may be eliminated, as shown in FIG. 12. FIG. 12 is a schematic diagram of a screen display strategy according to an embodiment of this application. A dotted triangular area 1101 in the figure corresponds to color light having an M/P ratio that is higher than the M/P ratio threshold, the sub-color light in this area is eliminated, and sub-color light in a solid quadrilateral area is retained. Screen display implemented in this manner retains a large quantity of color gamuts from a perspective of picture display. The sub-color light having the M/P ratio that is higher than the M/P ratio threshold is eliminated, so that the average M/P ratio is reduced. This effectively reduces an impact of blue light on a user and plays an anti-blue light role.

In conclusion, in embodiments of this application, sub-color light with a high M/P ratio may be eliminated in a more targeted manner based on a principle that a higher melanopic lux per photopic lux ratio indicates a stronger inhibitory effect on melatonin of the human body, and using the melanopic lux per photopic lux ratio as a basis to eliminate sub-color light. A screen display result, that is, updated color light, retains a large quantity of color ranges and picture details, and a negative impact of blue light on a user can be more effectively reduced simultaneously.

In an embodiment of this application, FIG. 13 is a schematic diagram of a screen display strategy according to another embodiment of this application. Target vertex color light can be determined from sub-color light having an M/P ratio that is equal to a preset melanopic lux per photopic lux ratio standard. A retained color gamut range is determined based on a connecting line between a color gamut coordinate point corresponding to the target vertex color light and two vertices corresponding to light of two sub-colors corresponding to low M/P ratios in an original color light color gamut. A to-be-eliminated color gamut range may be determined based on the color gamut coordinate value of the target vertex color light and color gamut coordinate values of three vertices of the original color light color gamut. As shown in a dotted area 1201 in the figure, sub-color light within the to-be-eliminated color gamut range is eliminated from the original color light, so that the screen may display updated color light. Compared with the method of eliminating the sub-color light with the M/P ratio higher than the M/P ratio threshold, although some color light with low M/P ratios is eliminated, most of the color gamut is still retained to maintain a good visual effect.

Specifically, a change in sub-color light is caused by a change in the relative intensities of red, green, and blue pixels of the electronic device. A linear space transformation matrix may be calculated based on a color gamut coordinate value of sub-color light with a highest melanopic lux per photopic lux ratio within the to-be-eliminated color gamut range and the color gamut coordinate value of the target vertex color light. Transformed color light corresponding to the sub-color light within the to-be-eliminated color gamut range is obtained based on a color gamut coordinate value of the sub-color light within the to-be-eliminated color gamut range and the linear space transformation matrix. Further, the sub-color light within the to-be-eliminated color gamut range is replaced with the transformed color light, so that the screen may display the updated color light. For example, as shown in FIG. 13, vertex A of a large triangle in the figure corresponds to the sub-color light with the highest melanopic lux per photopic lux ratio within the to-be-eliminated color gamut range, and point A' of a small triangle corresponds to the target vertex color light. That is, color light after the sub-color light corresponding to point A is transformed. In an RBG color mode, the sub-color light of point A is represented by a color gamut coordinate value [R, G, B]. After the M/P ratio threshold is determined as 4.69907, among sub-color light with an M/P ratio of 4.69907, light of one sub-color is determined to be the transformed color light, that is, the sub-color light corresponding to point A' represented by [R', G', B']. The retained color gamut range may be determined based on points A', B, and C, that is, a color gamut range corresponding to triangle A'BC. The to-be-eliminated color gamut range, that is, the dotted area 1201 in the figure, may be determined based on the original color light color gamut range, that is, a color gamut range corresponding to triangle ABC, and the color gamut range corresponding to triangle A'BC. According to the color gamut coordinate value [R, G, B] of point A and the color gamut coordinate value [R', G', B'] of point A', a $3\times3$ linear space transformation matrix M may be determined. After the linear space transformation matrix M is determined, the transformed color light corresponding to the sub-color light within the to-be-eliminated color gamut range may be calculated based on the linear space transformation matrix M and the sub-color light within the to-be-eliminated color gamut range. The transformed color light is used to replace the corresponding sub-color light within the to-be-eliminated color gamut range, thereby implementing screen display. An example in which the sub-color light corresponding to point A is transformed into the sub-color light corresponding to point A' is used. A relationship between the sub-color light corresponding to point A, the sub-color light corresponding to point A', and M may be expressed by formula (5) as follows:

$$\begin{bmatrix} R' \\ G' \\ B' \end{bmatrix} = M \times \begin{bmatrix} R \\ G \\ B \end{bmatrix} \qquad\qquad (5)$$

In this way, an M/P ratio of the updated color light does not exceed the preset melanopic lux per photopic lux ratio standard. Although some color light having M/P ratios that are lower than the M/P ratio threshold is eliminated, this color light is less, and most of the color gamut is ultimately retained, maintaining a good visual effect while a simpler algorithm is implemented.

In conclusion, according to the method for screen display provided in this application, the target vertex color light is determined based on the preset melanopic lux per photopic lux ratio standard, and the linear space transformation matrix M is calculated based on the target vertex color light and the sub-color light with the highest melanopic lux per photopic lux ratio within the to-be-eliminated color gamut range. Further, the transformed color light corresponding to the sub-color light within the to-be-eliminated color gamut range may be calculated based on the linear space transformation matrix M. The sub-color light is eliminated in a targeted manner, and the updated color light can be displayed on the screen through a relatively simple algorithm.

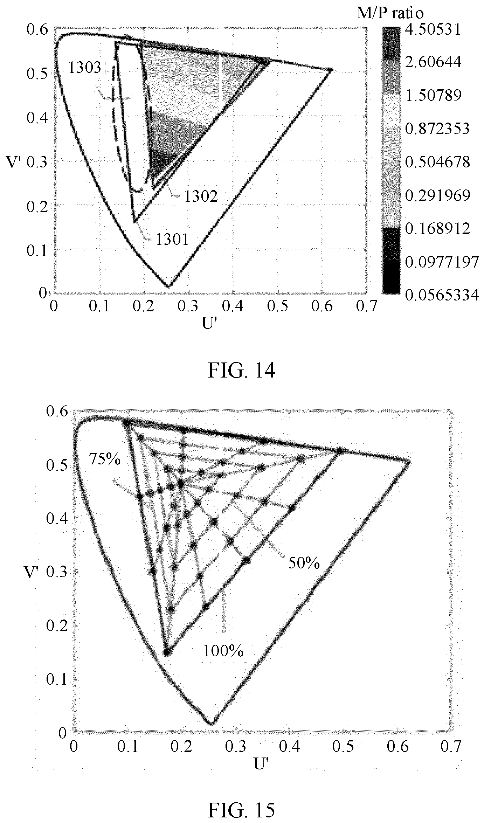

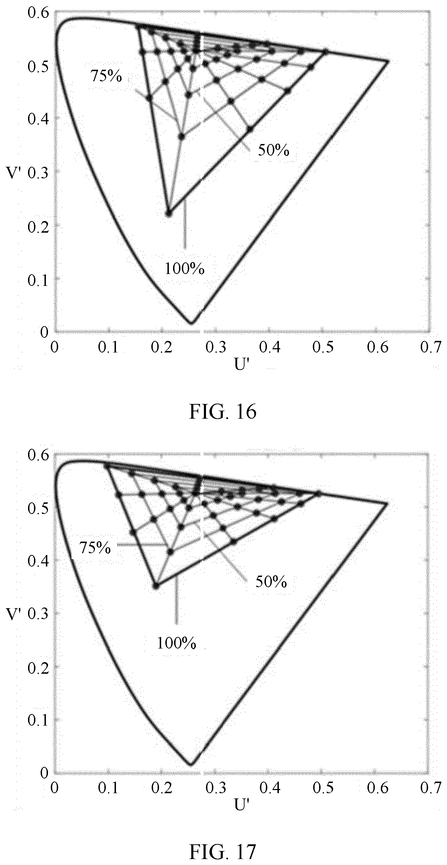

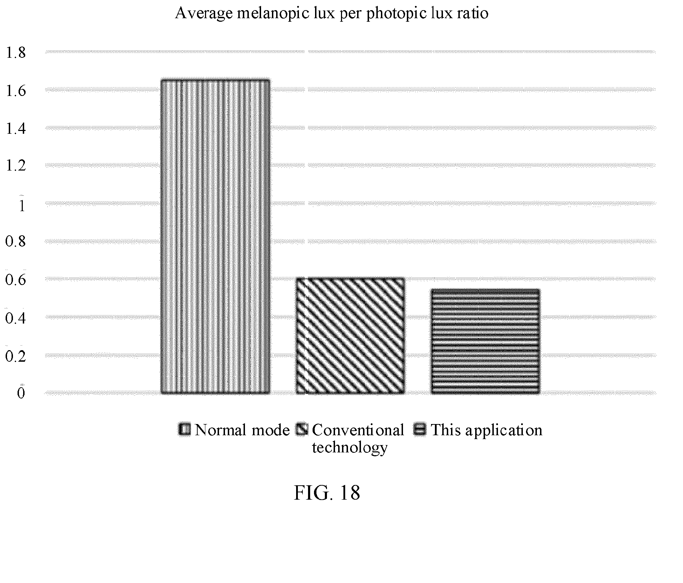

Compared with the method of compressing a color gamut of blue and green areas to reduce an impact of an electronic device on a user's physiological activities in conventional technologies, according to the method provided in embodiments of this application, the sub-color light can be eliminated in a more targeted manner based on the M/P ratio. A larger color gamut range can be retained, as shown in FIG. 14. FIG. 14 is a schematic diagram of compressing a color gamut of blue and green areas. In the figure, a large triangle area 1301 is an original color light color gamut range, a small triangle 1302 is a compressed color gamut range, and an area circled by a dashed line 1303 is a lost color gamut range. It can be learned that compared with the method provided in embodiments of this application, according to the existing compression strategy, more colors are caused to be lost in processed screen display, resulting in unrealistic displayed colors and missing of picture details. In addition, from a perspective of color distribution uniformity, updated color light displayed on the screen is distributed more evenly in embodiments of this application, providing the user with a better visual effect. As shown in FIG. 15 to FIG. 17. FIG. 15 is a schematic diagram of distribution of light of colors within an original color light color gamut range. FIG. 16 is a schematic diagram of distribution of light of colors after compression using conventional technologies. FIG. 17 is a schematic diagram of updated distribution of light of colors according to an embodiment of this application. FIG. 15 to FIG. 17 show distribution of points with saturation of 100%, 75%, 50%, and 25%. It can be learned that compared with this application, a green color in a screen display result obtained by compressing a color gamut of blue and green areas is uneven. However, according to the method provided in embodiments of this application, more even color distribution may be obtained and a user's visual experience is improved. The method provided in this application not only has advantages in color display, but also performs well in reducing an impact of the electronic device on the user's physiological activities. From a perspective of the M/P ratio for evaluation, under a same condition, the average M/P ratio in the screen display result obtained in embodiments of this application is lower. In other words, a negative impact on the user is lower. FIG. 18 is a schematic diagram of comparison of average melanopic lux per photopic lux ratios. Bar charts in the figure are, from left to right, an average M/P ratio of an original screen display result, an average M/P ratio of a screen display result corresponding to a conventional technology, and an average M/P ratio of a screen display result obtained based on the method provided in this application. It can be learned that according to the method provided in this application, the impact of the electronic device on the user's physiological activities can be more effectively reduced.

In embodiments of this application, the electronic device may be divided into function modules according to the foregoing method example. For example, each function module may be divided based on each corresponding function, or two or more functions may be integrated into one processing module. The integrated module may be implemented in the form of hardware, or may be implemented in the form of a software functional module. It should be noted that in embodiments of this application, the module division is an example, and is merely logical function division, and there may be other division manners during actual implementation.

It should be noted that all related content of the steps in the foregoing method embodiments may be cited in function description of corresponding functional modules. Details are not described herein again.

This embodiment further provides a computer-readable storage medium. The computer-readable storage medium includes instructions. When the instructions are run on an electronic device, the electronic device is enabled to perform the foregoing steps of relevant methods to implement the method in the foregoing embodiments.

This embodiment further provides a computer program product including instructions. When the computer program product is run on an electronic device, the electronic device is enabled to perform the foregoing steps of relevant methods to implement the method in the foregoing embodiments.

According to the foregoing descriptions of the implementations, a person skilled in the art may clearly understand that for the purpose of convenient and brief description, division of the foregoing function modules is used as an example for illustration. In actual application, the foregoing functions can be allocated to different function modules and implemented according to a requirement, that is, an inner structure of an apparatus is divided into different function modules to implement all or some of the functions descriptions of described above. For a detailed working process of the foregoing system, apparatus, and units, refer to a corresponding process in the foregoing method embodiments, and details are not described herein again.

In some embodiments provided in this embodiment, it should be understood that the disclosed apparatus and method may be implemented in other manners. For example, the apparatus embodiments described above are merely examples. For example, division into the modules or units is merely a logical function division and there may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate components may or may not be physically separated, and components displayed as units may or may not be physical units, may be located in one place, or may be distributed on a plurality of network units. Some or all of the units may be selected according to actual needs to achieve the objectives of the solutions of embodiments.

In addition, functional units in embodiments of this embodiment may be integrated into one processing unit, or each of the units may exist alone physically, or two or more units are integrated into one unit. The integrated unit may be implemented in the form of hardware, or may be implemented in the form of a software functional unit.

When the integrated unit is implemented in the form of a software functional unit and sold or used as an independent product, the integrated unit may be stored in a computer-readable storage medium. Based on such an understanding, the technical solutions of this embodiment essentially, or the part contributing to the conventional technologies, or all or some of the technical solutions may be implemented in the form of a software product. The computer software product is stored in a storage medium and includes a plurality of instructions for instructing a computer device (which may be a personal computer, a server, a network device, or the like) or a processor to perform all or some of the steps of the methods described in embodiments. The foregoing storage medium includes: any medium that can store program code, such as a flash memory, a removable hard disk, a read-only memory, a random access memory, a magnetic disk, or a compact disc.

The foregoing descriptions are merely specific implementations of this application, but are not intended to limit the protection scope of this application. Any variation or replacement within the technical scope of the appended claims shall fall within the protection scope of this application. Therefore, the protection scope of this application shall be subject to the protection scope of the claims.

**Claims**

1.  A method for screen display on a screen of an electronic device, comprising, by the electronic device:

obtaining spectral information of a plurality of sub-color lights in a color gamut of an original color light of a screen display picture;

calculating, for each sub-color light, a melanopic lux per photopic lux ratio of the sub-color light based on the spectral information of the sub-color light;

eliminating, from the original color light, any sub-color light among the plurality of sub-color lights having a melanopic lux per photopic lux ratio that exceeds a preset melanopic lux per photopic lux ratio standard to obtain an updated color light; and

displaying the updated color light on the screen, wherein the preset melanopic lux per photopic lux ratio standard is a standard set based on a goal of reducing melatonin inhibition.

2. The method according to claim 1, wherein the preset melanopic lux per photopic lux ratio standard is a melanopic lux per photopic lux ratio threshold, and the eliminating, from the original color light, any sub-color light among the plurality of sub-color lights having a melanopic lux per photopic lux ratio that exceeds a preset melanopic lux per photopic lux ratio standard to obtain an updated color light comprises:

eliminating, from the original color light, any sub-color light among the plurality of sub-color lights having a melanopic lux per photopic lux ratio that exceeds the melanopic lux per photopic lux ratio threshold, so that the screen displays the updated color light.

3. The method according to claim 2, wherein the obtained updated color light only retains the sub-color lights of the plurality of sub-color lights that have a melanopic lux per photopic lux ratio lower or equal to the melanopic lux per photopic lux ratio threshold.

4. The method according to claim 1, wherein the eliminating, from the original color light, any sub-color light among the plurality of sub-color lights having a melanopic lux per photopic lux ratio that exceeds a preset melanopic lux per photopic lux ratio standard to obtain an updated color light comprises:

determining a target vertex color light, from the plurality of sub-color lights, that has a melanopic lux per photopic lux ratio that is equal to the preset melanopic lux per photopic lux ratio standard;

determining a to-be-eliminated color gamut range based on a color gamut coordinate value of the target vertex color light and color gamut coordinate values of three vertices of the color gamut of the original color light; and

eliminating sub-color light within the to-be-eliminated color gamut range from the original color light to obtain the updated color light.

5. The method according to claim 4, wherein the eliminating the sub-color light within the to-be-eliminated color gamut range from the original color light to obtain the updated color light comprises:

calculating a linear space transformation matrix based on a color gamut coordinate value of a sub-color light among the plurality of sub-color lights with a highest melanopic lux per photopic lux ratio within the to-be-eliminated color gamut range, and the color gamut coordinate value of the target vertex color light;

obtaining, based on a color gamut coordinate value of a sub-color light within the to-be-eliminated color gamut range and the linear space transformation matrix, transformed color light corresponding to the sub-color light within the to-be-eliminated color gamut range; and

replacing the sub-color light within the to-be-eliminated color gamut range with the transformed color light to obtain the updated color light.

6. The method according to any one of claims 1 to 5, wherein a step for determining the preset melanopic lux per photopic lux ratio standard comprises:

determining the preset melanopic lux per photopic lux ratio standard based on a time period and a geographical location.

7. The method according to any one of claims 1 to 5, wherein a step for determining the preset melanopic lux per photopic lux ratio standard comprises:

determining the preset melanopic lux per photopic lux ratio standard based on a usage mode, wherein the usage mode represents a user's usage scenario.

8. The method according to any one of claims 1 to 5, wherein a step for determining the preset melanopic lux per photopic lux ratio standard comprises:

determining the preset melanopic lux per photopic lux ratio standard based on a time period, a geographical location, and a usage mode, wherein the usage mode represents a user's usage scenario.

9. The method according to claim 1, wherein the method further comprises:

adjusting the preset melanopic lux per photopic lux ratio standard when an average melanopic lux per photopic lux ratio corresponding to the updated color light is higher than a preset average melanopic lux per photopic lux ratio standard, to obtain an adjusted preset melanopic lux per photopic lux ratio standard;
eliminating, from the updated color light, sub-color light having a melanopic lux per photopic lux ratio that exceeds the adjusted preset melanopic lux per photopic lux ratio standard, to obtain an adjusted color light; and
displaying the adjusted color light on the screen,
wherein an average melanopic lux per photopic lux ratio corresponding to the adjusted color light is lower than or equal to the preset average melanopic lux per photopic lux ratio standard.

10. The method according to any one of claims 1 to 9, wherein the calculating, for each sub-color light, a melanopic lux per photopic lux ratio of the sub-color light based on the spectral information of the sub-color light comprises:

calculating, for each sub-color light and based on the spectral information of the sub-color light, melanopic equivalent daylight illuminance and brightness corresponding to the sub-color light; and
obtaining, based on a ratio of the melanopic equivalent daylight illuminance to the brightness, the melanopic lux per photopic lux ratio corresponding to the sub-color light.

11. The method according to any one of claims 1 to 9, wherein the plurality of sub-color lights is a plurality of sub-color lights within a color gamut range displayable on the screen.

12. A computer device, wherein the computer device comprises a processor (110) and a memory (121);

the memory (121) is configured to store program code and transmit the program code to the processor (110); and
the processor (110) is configured, when the computer device is included in an electronic device comprising a screen, to control the electronic device to perform, based on instructions in the program code, steps of the screen display method according to any one of claims 1 to 11.

13. A computer-readable storage medium (121), wherein the computer-readable storage medium stores a computer program which, when the computer program is executed by a computer device included in an electronic device comprising a screen, causes the electronic device to carry out the screen display method according to any one of claims 1 to 11.

**Patentansprüche**

1. Verfahren zur Bildschirmdarstellung auf einem Bildschirm eines elektronischen Geräts, wobei das elektronische Gerät Folgendes umfasst:

Erfassen von Spektralinformationen mehrerer Unterspektralfarben im Farbraum eines ursprünglichen Farblichts eines Bildschirmdarstellungsbildes;
für jede Unterspektralfarbe Berechnen eines Verhältnisses von melanopischem Lux zu photopischem Lux dieser Unterspektralfarbe basierend auf den Spektralinformationen der Unterspektralfarbe;
Eliminieren aus dem ursprünglichen Farblicht jede Unterspektralfarbe unter den mehreren Unterspektralfarben, die ein Verhältnis von melanopischem Lux zu photopischem Lux aufweist, das einen voreingestellten Standard für melanopisches Lux pro photopisches Lux überschreitet, um ein aktualisiertes Farblicht zu erhalten; und
Anzeigen des aktualisierten Farblichts auf dem Bildschirm, wobei der voreingestellte Standard für das Verhältnis von melanopischem Lux zu photopischem Lux ein Standard ist, der auf dem Ziel der Reduzierung der Melatonininhibition basiert.

2. Verfahren nach Anspruch 1, wobei der voreingestellte Standard für das Verhältnis von melanopischem Lux zu photopischem Lux ein Schwellenwert ist, und das Eliminieren aus dem ursprünglichen Farblicht jeder Unterspektralfarbe unter den mehreren Unterspektralfarben, deren Verhältnis von melanopischem Lux zu photopischem Lux den voreingestellten Standard überschreitet, um ein aktualisiertes Farblicht zu erhalten, Folgendes umfasst:
Eliminieren aus dem ursprünglichen Farblicht jede Unterspektralfarbe unter den mehreren Unterspektralfarben, deren Verhältnis von melanopischem Lux zu photopischem Lux den Schwellenwert überschreitet, sodass der Bildschirm das aktualisierte Farblicht anzeigt.

3. Verfahren nach Anspruch 2, wobei das erhaltene aktualisierte Farblicht nur die Unterspektralfarben der mehreren Unterspektralfarben beibehält, die ein Verhältnis von melanopischem Lux zu photopischem Lux aufweisen, das kleiner oder gleich dem Schwellenwert für das Verhältnis von melanopischem Lux zu photopischem Lux ist.

4. Verfahren nach Anspruch 1, wobei das Eliminieren aus dem ursprünglichen Farblicht jeder Unterspektralfarbe unter den mehreren Unterspektralfarben, deren Verhältnis von melanopischem Lux zu photopischem Lux den voreingestellten Standard überschreitet, um ein aktualisiertes Farblicht zu erhalten, Folgendes umfasst:

Bestimmen einer Ziel-Scheitelpunkt-Farblichts unter den mehreren Unterspektralfarben, das ein Verhältnis von melanopischem Lux zu photopischem Lux aufweist, das dem voreingestellten Standard für das Verhältnis von melanopischem Lux zu photopischem Lux entspricht;
Bestimmen eines zu eliminierenden Farbraumbereichs basierend auf einem Farbraumkoordinatenwert des Ziel-Scheitelpunkt-Farblichts und Farbraumkoordinatenwerten von drei Scheitelpunkten des Farbraums des ursprünglichen Farblichts; und
Eliminieren von Unterspektralfarben innerhalb des zu eliminierenden Farbraumbereichs aus dem ursprünglichen Farblicht, um das aktualisierte Farblicht zu erhalten.

5. Verfahren nach Anspruch 4, wobei das Eliminieren des Unterfarblichts innerhalb des zu eliminierenden Farbraumbereichs aus dem ursprünglichen Farblicht, um das aktualisierte Farblicht zu erhalten, Folgendes umfasst:

Berechnen einer linearen Raumtransformationmatrix basierend auf einem Farbraumkoordinatenwert eines Unterfarblichts mit dem höchsten melanopischen Lux-zu-photopischem Lux-Verhältnis unter den mehreren Unterfarblichtem innerhalb des zu eliminierenden Farbraumbereichs sowie dem Farbraumkoordinatenwert des Zielscheitelpunktsfarblichts;
Ermitteln, basierend auf einem Farbraumkoordinatenwert eines Unterfarblichts im zu eliminierenden Farbraumbereich und der linearen Raumtransformationmatrix, des transformierten Farblichts, das dem Unterfarblicht im zu eliminierenden Farbraumbereich entspricht; und
Ersetzen des Unterfarblichts im zu eliminierenden Farbraumbereich durch das transformierte Farblicht, um das aktualisierte Farblicht zu erhalten.

6. Verfahren nach einem der Ansprüche 1 bis 5, wobei ein Schritt zur Bestimmung des voreingestellten melanopischen Lux-zu-photopischen Lux-Verhältnis-Standards Folgendes umfasst:
Bestimmen des voreingestellten melanopischen Lux-zu-photopischen Lux-Verhältnis-Standards basierend auf einem Zeitraum und einem geografischen Standort.

7. Verfahren nach einem der Ansprüche 1 bis 5, wobei ein Schritt zur Bestimmung des voreingestellten melanopischen Lux-zu-photopischen Lux-Verhältnis-Standards Folgendes umfasst:
Bestimmen des voreingestellten melanopischen Lux-zu-photopischen Lux-Verhältnis-Standards basierend auf einem Nutzungsmodus, wobei der Nutzungsmodus das Nutzungsszenario eines Benutzers darstellt.

8. Verfahren nach einem der Ansprüche 1 bis 5, wobei ein Schritt zur Bestimmung des voreingestellten melanopischen Lux-zu-photopischen Lux-Verhältnis-Standards Folgendes umfasst:
Bestimmen des voreingestellten melanopischen Lux-zu-photopischen Lux-Verhältnis-Standards basierend auf einem Zeitraum, einem geografischen Standort und einem Nutzungsmodus, wobei der Nutzungsmodus das Nutzungsszenario eines Benutzers darstellt.

9. Verfahren nach Anspruch 1, wobei das Verfahren weiterhin Folgendes umfasst:

Anpassen des voreingestellten melanopischen Lux-zu-photopischen Lux-Verhältnis-Standards, wenn ein durchschnittliches melanopisches Lux-zu-photopisches Lux-Verhältnis, das dem aktualisierten Farblicht entspricht, höher ist als ein voreingestellter durchschnittlicher melanopischer Lux-zu-photopischer Lux-Verhältnis-Standard, um einen angepassten voreingestellten melanopischen Lux-zu-photopischen Lux-Verhältnis-Standard zu erhalten;
Eliminieren von Unterfarblicht aus dem aktualisierten Farblicht, das ein melanopisches Lux-zu-photopisches Lux-Verhältnis aufweist, das den angepassten voreingestellten melanopischen Lux-zu-photopischen Lux-Verhältnis-Standard überschreitet, um ein angepasstes Farblicht zu erhalten; und
Anzeigen des angepassten Farblichts auf dem Bildschirm,
wobei das durchschnittliche Verhältnis von melanopischem Lux zu photopischem Lux, das dem angepassten Farblicht entspricht, niedriger oder gleich dem voreingestellten durchschnittlichen Standardverhältnis von melanopischem Lux zu photopischem Lux ist.

10. Verfahren nach einem der Ansprüche 1 bis 9, wobei das Berechnen für jedes Subfarb-Licht ein Verhältnis von melanopischem Lux zu photopischem Lux des Subfarb-Lichts basierend auf den Spektralinformationen des Subfarb-Lichts umfasst:

für jedes Subfarb-Licht und auf Grundlage der Spektralinformationen des Subfarb-Lichts melanopische äquivalente Tageslichtbeleuchtungsstärke und Helligkeit berechnen, die dem Subfarb-Licht entsprechen; und
das Verhältnis von melanopischer äquivalenter Tageslichtbeleuchtungsstärke zur Helligkeit als Grundlage für das Verhältnis von melanopischem Lux zu photopischem Lux ermitteln, das dem Subfarb-Licht entspricht.

11. Verfahren nach einem der Ansprüche 1 bis 9, wobei die Mehrzahl von Subfarb-Lichtern eine Mehrzahl von Subfarb-Lichtern innerhalb eines Farbraums ist, der auf dem Bildschirm darstellbar ist.

12. Eine Computer-Vorrichtung, wobei die Computer-Vorrichtung einen Prozessor (110) und einen Speicher (121) umfasst;

wobei der Speicher (121) dafür konfiguriert ist, Programmcode zu speichern und den Programmcode an den Prozessor (110) zu übertragen; und
wobei der Prozessor (110) so konfiguriert ist, dass, wenn die Computer-Vorrichtung in einem elektronischen Gerät mit Bildschirm enthalten ist, das elektronische Gerät auf Grundlage von Anweisungen im Programmcode veranlasst wird, die Schritte des Bildschirmanzeigeverfahrens nach einem der Ansprüche 1 bis 11 auszuführen.

13. Ein computerlesbares Speichermedium (121), wobei das computerlesbare Speichermedium ein Computerprogramm speichert, das, wenn es von einer in einem elektronischen Gerät mit Bildschirm enthaltenen Computer-Vorrichtung ausgeführt wird, das elektronische Gerät veranlasst, das Bildschirmanzeigeverfahren nach einem der Ansprüche 1 bis 11 auszuführen.

**Revendications**

1. Procédé d'affichage sur un écran d'un dispositif électronique, comprenant, par ledit dispositif électronique :

l'obtention d'informations spectrales d'une pluralité de sous-lumières colorées dans le gamut de couleurs d'une lumière colorée d'origine d'une image affichée à l'écran ;
le calcul, pour chaque sous-lumière colorée, du rapport lux mélanopique par lux photopique de la sous-lumière colorée sur la base des informations spectrales de cette sous-lumière ;
l'élimination, à partir de la lumière colorée d'origine, de toute sous-lumière colorée parmi la pluralité de sous-lumières colorées ayant un rapport lux mélanopique par lux photopique supérieur à une valeur standard prédéfinie du rapport lux mélanopique par lux photopique, afin d'obtenir une lumière colorée mise à jour ; et
l'affichage de la lumière colorée mise à jour sur l'écran, ladite valeur standard prédéfinie du rapport lux mélanopique par lux photopique étant une norme définie selon un objectif de réduction de l'inhibition de la mélatonine.

2. Procédé selon la revendication 1, dans lequel la valeur standard prédéfinie du rapport lux mélanopique par lux photopique est un seuil de rapport lux mélanopique par lux photopique, et selon lequel l'élimination, à partir de la lumière colorée d'origine, de toute sous-lumière colorée parmi la pluralité de sous-lumières colorées ayant un rapport lux mélanopique par lux photopique supérieur au seuil permet d'obtenir une lumière colorée mise à jour, comprenant : l'élimination, à partir de la lumière colorée d'origine, de toute sous-lumière colorée parmi la pluralité de sous-lumières colorées ayant un rapport lux mélanopique par lux photopique supérieur au seuil, de façon à ce que l'écran affiche la lumière colorée mise à jour.

3. Procédé selon la revendication 2, dans lequel la lumière colorée mise à jour obtenue ne conserve que les sous-lumières colorées de la pluralité ayant un rapport lux mélanopique par lux photopique inférieur ou égal au seuil.

**4.** Procédé selon la revendication 1, dans lequel l'élimination, à partir de la lumière colorée d'origine, de toute sous-lumière colorée parmi la pluralité de sous-lumières colorées ayant un rapport lux mélanopique par lux photopique supérieur à une valeur standard prédéfinie du rapport lux mélanopique par lux photopique afin d'obtenir une lumière colorée mise à jour, comprend :

la détermination, parmi la pluralité de sous-lumières colorées, d'une lumière colorée sommet cible ayant un rapport lux mélanopique par lux photopique égal à la valeur standard prédéfinie du rapport lux mélanopique par lux photopique ;

la détermination d'une plage de gamut de couleurs à éliminer sur la base d'une valeur de coordonnées de gamut de la lumière colorée sommet cible et des valeurs de coordonnées de gamut des trois sommets du gamut de la lumière colorée d'origine ; et

l'élimination de la sous-lumière colorée dans la plage de gamut à éliminer de la lumière colorée d'origine pour obtenir la lumière colorée mise à jour.

**5.** Le procédé selon la revendication 4, dans lequel l'élimination de la sous-lumière colorée dans la plage de gamut de couleurs à éliminer à partir de la lumière colorée d'origine afin d'obtenir la lumière colorée mise à jour comprend :

calculer une matrice de transformation d'espace linéaire sur la base d'une valeur de coordonnées de gamut de couleurs d'une sous-lumière colorée parmi une pluralité de sous-lumières colorées présentant le rapport melanopic lux par photopic lux le plus élevé dans la plage de gamut de couleurs à éliminer, et la valeur de coordonnées de gamut de couleurs de la lumière colorée du sommet cible ;

obtenir, sur la base d'une valeur de coordonnées de gamut de couleurs d'une sous-lumière colorée dans la plage de gamut de couleurs à éliminer et de la matrice de transformation d'espace linéaire, une lumière colorée transformée correspondant à la sous-lumière colorée dans la plage de gamut de couleurs à éliminer ; et

remplacer la sous-lumière colorée dans la plage de gamut de couleurs à éliminer par la lumière colorée transformée pour obtenir la lumière colorée mise à jour.

**6.** Le procédé selon l'une quelconque des revendications 1 à 5, dans lequel une étape visant à déterminer la norme prédéfinie du rapport melanopic lux par photopic lux comprend :

déterminer la norme prédéfinie du rapport melanopic lux par photopic lux en fonction d'une période de temps et d'une localisation géographique.

**7.** Le procédé selon l'une quelconque des revendications 1 à 5, dans lequel une étape visant à déterminer la norme prédéfinie du rapport melanopic lux par photopic lux comprend :

déterminer la norme prédéfinie du rapport melanopic lux par photopic lux en fonction d'un mode d'utilisation, ledit mode d'utilisation représentant un scénario d'usage de l'utilisateur.

**8.** Le procédé selon l'une quelconque des revendications 1 à 5, dans lequel une étape visant à déterminer la norme prédéfinie du rapport melanopic lux par photopic lux comprend :

déterminer la norme prédéfinie du rapport melanopic lux par photopic lux en fonction d'une période de temps, d'une localisation géographique et d'un mode d'utilisation, ledit mode d'utilisation représentant un scénario d'usage de l'utilisateur.

**9.** Le procédé selon la revendication 1, dans lequel le procédé comprend en outre :

ajuster la norme prédéfinie du rapport melanopic lux par photopic lux lorsqu'un rapport moyen melanopic lux par photopic lux correspondant à la lumière colorée mise à jour est supérieur à une norme prédéfinie moyenne de rapport melanopic lux par photopic lux, afin d'obtenir une norme prédéfinie ajustée ;

éliminer, de la lumière colorée mise à jour, la sous-lumière colorée ayant un rapport melanopic lux par photopic lux supérieur à la norme prédéfinie ajustée, afin d'obtenir une lumière colorée ajustée ; et

afficher la lumière colorée ajustée sur l'écran,

dans lequel un rapport moyen lux mélanopique par lux photopique correspondant à la lumière de couleur ajustée est inférieur ou égal au standard prédéfini de rapport moyen lux mélanopique par lux photopique.

**10.** Procédé selon l'une quelconque des revendications 1 à 9, dans lequel le calcul, pour chaque lumière de sous-couleur, d'un rapport lux mélanopique par lux photopique de la lumière de sous-couleur basé sur l'information spectrale de la lumière de sous-couleur comprend :

calcul du niveau d'éclairement médio-équivalent mélanopique et de la luminosité correspondant à chaque lumière de sous-couleur sur la base des informations spectrales de chaque lumière de sous-couleur ; et obtention, sur la base du rapport entre l'éclairement équivalent mélanopique et la luminosité, du rapport lux mélanopique par lux photopique correspondant à la lumière de sous-couleur.

11. Procédé selon l'une quelconque des revendications 1 à 9, dans lequel la pluralité de lumières de sous-couleur est une pluralité de lumières de sous-couleur comprises dans une plage de gamut de couleur affichable sur l'écran.

12. Dispositif informatique, dans lequel le dispositif informatique comprend un processeur (110) et une mémoire (121) ;

la mémoire (121) est configurée pour stocker le code du programme et transmettre le code du programme au processeur (110) ; et
le processeur (110) est configuré, lorsque le dispositif informatique est inclus dans un dispositif électronique comprenant un écran, pour contrôler le dispositif électronique à exécuter, selon les instructions du code du programme, les étapes du procédé d'affichage à l'écran selon l'une quelconque des revendications 1 à 11.

13. Support de stockage lisible par ordinateur (121), dans lequel le support de stockage lisible par ordinateur stocke un programme informatique qui, lorsqu'il est exécuté par un dispositif informatique inclus dans un dispositif électronique comprenant un écran, amène ledit dispositif électronique à réaliser le procédé d'affichage à l'écran selon l'une quelconque des revendications 1 à 11.

FIG. 1

FIG. 2

FIG. 3

**Application layer**

| Camera | Calendar | Map | WLAN | Music | Message |
| Gallery | Phone | Navigation | Bluetooth | Video | ... |

**Application framework layer**

| Window manager | Content provider | Phone manager | Resource manager |
| Notification manager | View system | ... | |

**System library** — Android runtime

| Surface manager | Three-dimensional graphics processing library |
| Two-dimensional graphics engine | Media library | ... |

**Kernel layer**

| Display drive | Camera drive |
| Audio drive | Sensor drive | ... |

FIG. 4

FIG. 5

FIG. 6

FIG. 7

FIG. 8

FIG. 9

FIG. 10

FIG. 11

FIG. 12

FIG. 13

FIG. 14

FIG. 15

FIG. 16

FIG. 17

Average melanopic lux per photopic lux ratio

□ Normal mode ▨ Conventional ▤ This application
technology

FIG. 18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015379961 A1
- US 2020202585 A1
- CN 110428794 A
- US 11287692 B